(19) Europäisches Patentamt
European Patent Office
Office européen des brevets

(11) EP 1 752 332 A2

(12) EUROPEAN PATENT APPLICATION

(43) Date of publication:
**14.02.2007 Bulletin 2007/07**

(51) Int Cl.:
***B60L 11/18*** *(2006.01)*

(21) Application number: **06016710.3**

(22) Date of filing: **10.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.08.2005 JP 2005231862**

(71) Applicant: **Hitachi, Ltd.**
**Tokyo 100-8280 (JP)**

(72) Inventors:
- **Sekiguchi, Hideki**
**c/o Hitachi, Ltd., Int. Prop. Gr**
**6-1, Marunouchi 1-chome**
**Tokyo 100-8220 (JP)**
- **Hamai, Kyugo**
**c/o Hitachi, Ltd., Int. Prop. Gr.**
**6-1, Marunouchi 1-chome**
**Tokyo 100-8220 (JP)**

(74) Representative: **Beetz & Partner**
**Steinsdorfstrasse 10**
**D-80538 München (DE)**

# (54) Running controller and electric running control system for electric vehicle

(57) A running controller and an electric running control system for an electric vehicle, in which when a tire slip occurs during running of the vehicle, such as under driving, braking and turning, a motor output is controlled to always maximize the coefficient μ of road friction, thereby obtaining a maximum tire driving force and a maximum tire braking force. In the electric vehicle, wheels 4, 5, 6, 7 are driven and braked through control of electric driving apparatus 8, 9 each including a motor 101. When slipping of any of the wheels 4, 5, 6, 7 is detected, ESC-CU 31 executes powering and regenerative control of the motor 101 to change, depending on road conditions, a target value to which a slip rate is to be converged. The ESC-CU 31 calculates the coefficient μ of road friction based on a motor current and executes the powering and regenerative control of the motor 101 such that the calculated coefficient μ of road friction is maintained in the vicinity of a maximum value thereof.

FIG. 1

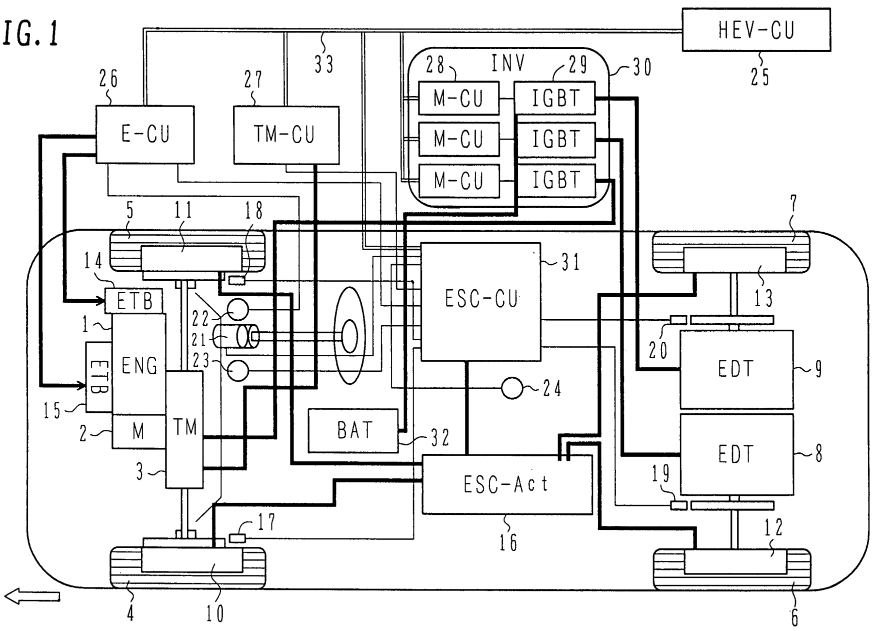




Printed by Jouve, 75001 PARIS (FR)

## Description

BACKGROUND OF THE INVENTION

1. Field of the Invention

The present invention relates to a running controller and an electric running control system for an electric vehicle, such as an electric car or a hybrid car, in which at least one of wheels of the vehicle is driven by a motor for running of the vehicle.

2. Description of the Related Art

In one example of known electric vehicles, such as electric cars or hybrid cars, each of which employs a motor as a driving source, a motor output and a regenerative braking force are controlled depending on the difference in rotation speed between a drive wheel and a driven wheel, thereby eliminating a wheel slip in a motor driving mode and a regenerative braking mode, as disclosed in JP-UA-5-2501.

SUMMARY OF THE INVENTION

With the motor braking/driving control as disclosed in JP-UA-5-2501, however, the following problem occurs because the motor output and the regenerative braking force are controlled depending on the difference in rotation speed between the drive wheel and the driven wheel.
A tire braking/driving force F is expressed by the following formula (1);

$$F = \mu \times W \qquad \ldots(1)$$

where $\mu$ is the coefficient of road friction, and W is the load of tire contact.
Further, in the relationship between the coefficient $\mu$ of road friction and the tire slip rate, a slip rate providing a maximum value $\mu$max of the coefficient of road friction varies depending on road conditions. In order to always maximize the acceleration/deceleration performance, the driving/braking force is preferably controlled such that the coefficient $\mu$ of road friction has a maximum value. With the motor braking/driving control as disclosed in JP,U 5-2501, however, because the motor control is performed depending on the difference in rotation speed between the drive wheel and the driven wheel, it is impossible to perform the control in such a manner as always providing the maximum coefficient $\mu$ of road friction in all of the road conditions.
An object of the present invention is to provide a running controller and an electric running control system for an electric vehicle, in which when a tire slip occurs during running of the vehicle, such as under driving, braking and turning, a motor output is controlled to always maximize the coefficient $\mu$ of road friction, thereby obtaining a maximum tire driving force and a maximum tire braking force.
To achieve the above object, the present invention provides a running controller for an electric vehicle in which a wheel is driven and braked through control of an electric driving apparatus including a motor, wherein the running controller includes a control unit for executing powering and regenerative control of the motor to change, depending on road conditions, a target value to which a slip rate is to be converged, when slipping of the wheel is detected.
With that feature, when a tire slip occurs during running of the vehicle, a maximum tire driving force and a maximum tire braking force can be obtained.
Preferably, the control unit calculates the coefficient $\mu$ of road friction based on a motor current and executes the powering and regenerative control of the motor such that the calculated coefficient $\mu$ of road friction is maintained in the vicinity of a maximum value thereof.
Preferably, the control unit performs regenerative braking of the motor of the electric driving apparatus when slipping of the wheel is detected in a state of the electric vehicle being driven by the motor of the electric driving apparatus; the control unit performs powering control of the motor of the electric driving apparatus when a reversal of a value of the coefficient $\mu$ of road friction from an increase to a decrease is detected during the regenerative braking; and the control unit performs regenerative braking of the motor of the electric driving apparatus again when a reversal of a value of the coefficient $\mu$ of road friction from an increase to a decrease is detected during the powering control.
Preferably, the electric vehicle drives a wheel by an engine having an electronic throttle valve; and when slipping of the wheel driven by the engine is detected, the control unit controls the electronic throttle valve in a valve closing direction until the slipping of the wheel is suppressed, thereby reducing an output of the engine, and the control unit executes the powering and regenerative control of the motor such that the coefficient μ of road friction is maintained in the vicinity of the maximum value thereof.

Preferably, when the electronic throttle valve is substantially fully closed as a result of controlling the electronic throttle valve in the valve closing direction until the slipping of the wheel is suppressed, the control unit stops the engine and drives the wheel for running of the electric vehicle by the motor of the electric driving apparatus.

Preferably, the electric vehicle includes a steering angle sensor for detecting a steering angle applied from a driver; the electric driving apparatus drives a pair of left and right wheels independently of each other; the control unit executes the powering and regenerative control of the motor of the electric driving apparatus such that the calculated coefficient μ of road friction is maintained in the vicinity of the maximum value thereof, when slipping of any one of the pair of left and right wheels is detected; and the control unit sets motor torque for driving non-slipping one of the pair of left and right wheels to be substantially equal to motor torque for driving the other wheel when straightforward running of the electric vehicle is detected based on a signal from the steering angle sensor.

Preferably, the control unit weakens a regenerative braking force of the motor of the electric driving apparatus when slipping of the wheel is detected in a state of the electric vehicle being braked by motor regenerative braking in the electric driving apparatus; the control unit strengthens the regenerative braking force of the motor of the electric driving apparatus when a reversal of a value of the coefficient μ of road friction from an increase to a decrease is detected after weakening the regenerative braking force; and the control unit weakens the motor regenerative braking force again when a reversal of a value of the coefficient μ of road friction from an increase to a decrease is detected after strengthening the motor regenerative braking force.

Preferably, the electric vehicle includes a steering angle sensor for detecting a steering angle applied from a driver; the electric driving apparatus drives a pair of left and right wheels independently of each other; the control unit executes the regenerative control of the motor of the electric driving apparatus such that the calculated coefficient μ of road friction is maintained in the vicinity of the maximum value thereof, when slipping of any one of the pair of left and right wheels is detected; and the control unit sets motor regenerative torque in the electric driving apparatus for braking non-slipping one of the pair of left and right wheels to be substantially equal to motor regenerative torque for braking the other wheel when straightforward running of the electric vehicle is detected based on a signal from the steering angle sensor.

Preferably, when turning of the electric vehicle is detected based on the signal from the steering angle sensor, the control unit gives a difference in motor driving torque or regenerative torque between left and right electric driving apparatus to generate a vehicle turn moment due to the torque difference, thereby assisting the electric vehicle to turn; and when the control unit controls, upon detection of slipping of any one of the pair of left and right wheels, the motor torque generated by the motor of each of the electric driving apparatuss such that the calculated coefficient μ of road friction is maintained in the vicinity of the maximum value thereof, the control unit modifies the motor torque of the other non-slipping wheel such that a target turn moment set depending on the steering angle is obtained.

Also, to achieve the above object, the present invention provides an electric running control system for an electric vehicle in which a wheel is driven and braked through control of an electric driving apparatus including a motor, the electric running control system comprising the electric driving apparatus; a motor control unit for controlling electric power supplied to the electric driving apparatus; and a running controller for controlling the motor control unit, the running controller including a control unit for executing powering and regenerative control of the motor to change, depending on road conditions, a target value to which a slip rate is to be converged, when slipping of the wheel is detected.

With those features, when a tire slip occurs during running of the vehicle, a maximum tire driving force and a maximum tire braking force can be obtained.

According to the present invention, when a tire slip occurs during running of the vehicle, the motor output is controlled to always maximize the coefficient μ of road friction, thereby obtaining the maximum tire driving force and the maximum tire braking force.

## BRIEF DESCRIPTION OF THE DRAWINGS

Fig. 1 is a system block diagram showing the construction of a first example of an electric vehicle equipped with a running controller and an electric running control system for an electric vehicle according to one embodiment of the present invention;

Fig. 2 is a sectional view showing one construction of an electric driving apparatus used in the electric running control system for the electric vehicle according to the embodiment of the present invention;

Fig. 3 is a sectional view showing another construction of the electric driving apparatus used in the electric running control system for the electric vehicle according to the embodiment of the present invention;

Fig. 4 is a sectional view showing still another construction of the electric driving apparatus used in the electric running control system for the electric vehicle according to the embodiment of the present invention;

Fig. 5 is a sectional view showing still another construction of the electric driving apparatus used in the electric running control system for the electric vehicle according to the embodiment of the present invention;

Fig. 6 is a flowchart showing overall control contents in control of an engine and a motor in the event of a tire slip when the vehicle is driven, the control being executed by the running controller for the electric vehicle according to the embodiment of the present invention;

Fig. 7 is a graph for explaining a map of an accelerator opening versus demanded driving torque, which is used in the control of the engine and the motor in the event of a tire slip when the vehicle is driven, the control being executed by the running controller for the electric vehicle according to the embodiment of the present invention;

Fig. 8 is a graph for explaining a region determination map based on a vehicle speed (VSP) and demanded driving torque, which is used in the control of the engine and the motor in the event of a tire slip when the vehicle is driven, the control being executed by the running controller for the electric vehicle according to the embodiment of the present invention;

Fig. 9 is a flowchart showing control contents in the control of the engine in the event of a tire slip when the vehicle is driven, the control being executed by the running controller for the electric vehicle according to the embodiment of the present invention;

Fig. 10 is a flowchart showing control contents in the control of the motor in the event of a tire slip when the vehicle is driven, the control being executed by the running controller for the electric vehicle according to the embodiment of the present invention;

Fig. 11 is a graph for explaining the operation in the control of the motor in the event of a tire slip when the vehicle is driven, the control being executed by the running controller for the electric vehicle according to the embodiment of the present invention;

Fig. 12 is a graph for explaining the relationship between the slip rate and the coefficient $\mu$ of road friction depending on differences in the road condition;

Fig. 13 is a flowchart showing overall control contents in the control of the engine and the motor in the event of a tire slip when the vehicle is braked, the control being executed by the running controller for the electric vehicle according to the embodiment of the present invention;

Fig. 14 is a flowchart showing principal control contents in the control of the engine and the motor in the event of a tire slip when the vehicle is braked, the control being executed by the running controller for the electric vehicle according to the embodiment of the present invention;

Fig. 15 is a flowchart showing overall control contents in the control of the engine and the motor in the event of a tire slip when the vehicle is turned, the control being executed by the running controller for the electric vehicle according to the embodiment of the present invention;

Fig. 16 is a flowchart showing principal control contents in the control of the engine and the motor in the event of a tire slip when the vehicle is turned, the control being executed by the running controller for the electric vehicle according to the embodiment of the present invention;

Fig. 17 is a graph for explaining a map of a brake depressing force versus demanded braking torque, which is used in the control of the engine and the motor in the event of a tire slip when the vehicle is turned, the control being executed by the running controller for the electric vehicle according to the embodiment of the present invention;

Fig. 18 is a graph for explaining a map of a steering angle versus difference in braking torque between the left and right sides, which is used in the control of the engine and the motor in the event of a tire slip when the vehicle is turned, the control being executed by the running controller for the electric vehicle according to the embodiment of the present invention;

Fig. 19 is a graph for explaining a map of an accelerator opening versus demanded driving torque, which is used in the control of the engine and the motor in the event of a tire slip when the vehicle is turned, the control being executed by the running controller for the electric vehicle according to the embodiment of the present invention;

Fig. 20 is a graph for explaining a map of a steering angle versus difference in driving torque between left and right motors, which is used in the control of the engine and the motor in the event of a tire slip when the vehicle is turned, the control being executed by the running controller for the electric vehicle according to the embodiment of the present invention;

Fig. 21 is a graph for explaining a map of a steering angle versus motor driving torque of an outer wheel in turning and motor regenerative braking torque of an inner wheel in turning, which is used in the control of the engine and the motor in the event of a tire slip when the vehicle is turned, the control being executed by the running controller for the electric vehicle according to the embodiment of the present invention;

Fig. 22 is a system block diagram showing the construction of a second example of the electric vehicle equipped with the running controller and the electric running control system for the electric vehicle according to the embodiment of the present invention;

Fig. 23 is a system block diagram showing the construction of a third example of the electric vehicle equipped with the running controller and the electric running control system for the electric vehicle according to the embodiment of the present invention;

Fig. 24 is a system block diagram showing the construction of a fourth example of the electric vehicle equipped with the running controller and the electric running control system for the electric vehicle according to the embodiment of the present invention;

Fig. 25 is a system block diagram showing the construction of a fifth example of the electric vehicle equipped with the running controller and the electric running control system for the electric vehicle according to the embodiment of the present invention;

Fig. 26 is a system block diagram showing the construction of a sixth example of the electric vehicle equipped with the running controller and the electric running control system for the electric vehicle according to the embodiment of the present invention;

Fig. 27 is a system block diagram showing the construction of a seventh example of the electric vehicle equipped with the running controller and the electric running control system for the electric vehicle according to the embodiment of the present invention; and

Fig. 28 is a system block diagram showing the construction of an eighth example of the electric vehicle equipped with the running controller and the electric running control system for the electric vehicle according to the embodiment of the present invention.

DESCRIPTION OF THE PREFERRED EMBODIMENTS

The construction and operation of a running controller and an electric running control system for an electric vehicle according to one embodiment of the present invention will be described below with reference to Figs. 1-28. The following description is made in connection with, e.g., a hybrid electric vehicle employing a motor and an internal combustion engine as driving sources, which is one example of electric vehicles.

The internal combustion engine is a motive power source for outputting motive power with burning of fuel and is, for example, a gasoline engine, a diesel engine, or a gas engine gaseous fuel, such as hydrogen gas. In the following description, the internal combustion engine is referred to simply as the engine.

First, the construction of the electric vehicle equipped with the running controller and the electric running control system for the electric vehicle according to one embodiment will be described below with reference to Fig. 1.

Fig. 1 is a system block diagram showing the construction of a first example of the electric vehicle equipped with the running controller and the electric running control system for the electric vehicle according to one embodiment of the present invention.

The electric vehicle shown in Fig. 1 includes, as driving sources, an engine 1, a motor 2, and electric driving apparatuss (EDT) 8 and 9. As described later with reference to Figs. 2-5, each of the electric driving apparatuss 8 and 9 comprises a motor and a reduction gearing. The engine 1 and the motor 2 drive front wheels 4 and 5, while the electric driving apparatuss 8 and 9 drive rear wheels 6 and 7.

An output from the engine 1 and the motor 2 coupled to an engine crankshaft is increased or decreased in speed by a transmission 3 and drives the pair of front wheels 4 and 5 through a differential mechanism disposed inside the transmission 3. The electric driving apparatuss 8 and 9 are coupled to the left and right rear wheels 6, 7 and drive the left and right rear wheels 6, 7, respectively.

The rotation speed of the engine 1 is controlled by an engine control unit (E-CU) 26. The engine control unit (E-CU) 26 controls the engine 1 in accordance with an accelerator opening signal detected by an accelerator opening sensor 22, a signal from an electronic throttle valve position sensor disposed in an electronic throttle body (ETB) (or valve) 14, an engine rotation speed signal, and an engine cooling water temperature signal. The engine control unit (E-CU) 26 controls the electronic throttle body (ETB) 14 to change the opening of a throttle valve, thereby controlling the amount of air taken into the engine 1. The engine control unit (E-CU) 26 also controls a fuel injection valve (INJ) 15, thereby controlling the fuel injection amount supplied to the engine 1.

A transmission control unit (TM-CU) 27 controls a gear ratio of the transmission 3 depending on the vehicle running state.

An inverter (INV) 30 comprises three motor control units (M-CU) 28 and three semiconductor switching devices in the form of IGBTs (Insulated Gate Bipolar Transistors) 29. The three motor control units (M-CU) 28 control respectively the three semiconductor switching devices in the form of IGBTs (Insulated Gate Bipolar Transistors) 29. DC power of a battery (BAT) 32 is converted to AC power that is supplied to the motor 2 and the respective motors inside the electric driving apparatuss 8 and 9, thereby controlling output torques of those motors. Each of the motors is, for example, a 3-phase synchronous motor. During regenerative braking, output power of each motor is converted to DC power that is accumulated in the battery 32.

An engine-stability-control control unit (ESC-CU) 31 detects wheel locked states based on respective wheel speeds detected by wheel speed sensors 17, 18, 19 and 20 which are disposed in association with the wheels 4, 5, 6 and 7. In the event of a slip, an engine-stability-control actuator (ESC-Act) 16 controls brakes 10, 11, 12 and 13 disposed in association with the wheels 4, 5, 6 and 7. Namely, the engine-stability-control control unit (ESC-CU) 31 serves as the so-called anti-brake system (ABC) to control the brakes.

Further, the engine-stability-control control unit (ESC-CU) 31 detects wheel slip states during running of the vehicle, such as under driving, braking and turning, based on the respective wheel speeds detected by the wheel speed sensors 17, 18, 19 and 20, and then executes driving control or regenerative braking control of the motor 2 and the motors inside the electric driving apparatuss 8 and 9. In other words, the engine-stability-control control unit (ESC-CU) 31 corresponds to the running controller for the electric vehicle according to the embodiment. Also, the engine-stability-control control unit (ESC-CU) 31, the inverter 30, and the electric driving apparatuss 8 and 9 constitute the electric running control system for the electric vehicle according to the embodiment.

When the engine-stability-control control unit (ESC-CU) 31 controls the engine 1, it outputs a control command to the engine control unit (E-CU) 26, whereupon the engine control unit (E-CU) 26 controls the engine 1 in accordance with the control command. Also, when the engine-stability-control control unit (ESC-CU) 31 controls each motor, it outputs a control command to the corresponding motor control units (M-CU) 28, whereupon the motor control units (M-CU) 28 controls the motor in accordance with the control command. Details of running control by the engine-stability-control control unit (ESC-CU) 31 will be described later with reference to Figs. 6-21.

The engine-stability-control control unit (ESC-CU) 31 determines based on a signal from a brake depressing force sensor 23 whether a brake pedal is depressed and how degree the brake pedal is depressed, thereby determining, for example, whether the vehicle is under braking. Also, the engine-stability-control control unit (ESC-CU) 31 determines based on a signal from a steering angle sensor 21 whether the vehicle runs straightforward or turns. In addition, the engine-stability-control control unit (ESC-CU) 31 detects the vehicle speed from an output of an acceleration/deceleration sensor 24.

The engine control unit (E-CU) 26, the transmission control unit (TM-CU) 27, the motor control units (M-CU) 28, and the engine-stability-control control unit (ESC-CU) 31 are controlled by a higher-level hybrid electric vehicle control unit (HEV-VU) 25 in an integrated manner.

When the vehicle is driven, the rotation speed of the engine 1 and the motor 2 coupled to the engine crankshaft is increased or decreased by the transmission 3, and the pair of front wheels 4 and 5 are driven through the differential mechanism disposed inside the transmission 3. The electric driving apparatuss 8 and 9 are coupled to the left and right rear wheels 6, 7, whereby the left and right rear wheels 6, 7 are driven by the electric driving apparatuss 8 and 9, respectively.

When the vehicle is braked, the pair of front wheels 4 and 5 are braked by a resultant force generated from the hydraulic brakes 10 and 11 associated with the left and right front wheels 4, 5 and the regenerative braking of the motor 1 coupled to the engine crankshaft. Also, the pair of rear wheels 6 and 7 are braked primarily by the regenerative braking of the motors constituting the pair of electric driving apparatuss 8 and 9 associated with the left and right rear wheels 6, 7, respectively, and additionally by the hydraulic brakes 12 and 13.

One construction of the electric driving apparatus 8 used in the electric running control system for the electric vehicle according to the embodiment will be described below with reference to Fig. 2. Note that the electric driving apparatus 9 also has the same construction.

Fig. 2 is a sectional view showing one construction of the electric driving apparatus used in the electric running control system for the electric vehicle according to the embodiment of the present invention.

The electric driving apparatus 8 comprises a motor 101 and a reduction gearing 102. The reduction gearing 102 is constituted by a planetary gearing made up of a sun gear 103, a ring gear 104, a plurality of pinion gears 105 meshing with the sun gear 103 and the ring gear 104, and a carrier 106 supporting the plurality of pinion gears 105 in such a manner that each pinion gear is able to rotate about its own axis and to revolve around the sun gear 103.

A motor shaft 107 is coupled to the sun gear 103, and the ring gear 104 is coupled to a reduction gearing case 108 to be fixed in an un-rotatable manner. The carrier 106 is coupled to a drive shaft 109. With such an arrangement, rotation of the motor 101 drives a tire 6 through the drive shaft 109 while the rotation speed is reduced.

While in the illustrated example the reduction gearing is constituted by one set of planetary gearing, the number of sets of planetary gearing is not limited to one. The reduction gearing may be constituted by a plurality of planetary gearings to provide a larger reduction ratio of the reduction gearing. Also, while the sun gear 103, the ring gear 104, and the carrier 106 are coupled respectively to the motor shaft 107, the case 108, and the drive shaft 109, an arrangement is not limited to such a combination and can be modified to other suitable combination so long as the rotation speed of the motor shaft is reduced. Further, while the illustrated electric driving apparatus is constituted as a single-pinion planetary gearing, it may be a double-pinion planetary gearing.

Another construction of the electric driving apparatus used in the electric running control system for the electric vehicle according to the embodiment will be described below with reference to Fig. 3.

Fig. 3 is a sectional view showing another construction of the electric driving apparatus used in the electric running control system for the electric vehicle according to the embodiment of the present invention. Note that the same reference numerals as those in Fig. 2 denote the same components.

An electric driving apparatus 8A shown in Fig. 3 includes a transmission 112 instead of the reduction gearing 102 shown in Fig. 2. The transmission 112 is constituted by a planetary gearing made up of a sun gear 113, a ring gear 114, a plurality of pinion gears 115 meshing with the sun gear 113 and the ring gear 114, and a carrier 116 supporting the plurality of pinion gears 115 in such a manner that each pinion gear is able to rotate about its own axis and to revolve around the sun gear 113.

The motor shaft 107 is coupled to the carrier 116 through the sun gear 113 and a clutch 119. The ring gear 114 is coupled to a case 121 of the electric driving apparatus through a bi-directional brake 120. The carrier 116 is coupled to the drive shaft 109. The clutch 119 can be, e.g., an electromagnetic clutch or a hydraulic clutch. The bi-directional brake 120 is, e.g., an electromagnetic brake.

In the transmission 112 having the above-described arrangement, a first-speed gear stage (first shift stage) and a second-speed gear stage (second shift stage) are selectively established by controlling engagement and disengagement of the clutch 119 and engagement and disengagement of the bi-directional brake 120. A specific speed change ratio $\gamma$ (= input shaft rotation speed Nin / output shaft rotation speed Nout) is assigned to each gear stage. For example, the first-speed gear stage (first shift stage) is established by disengaging the clutch 119 and engaging the bi-directional brake 120 so as to prevent the ring gear 114 from rotating in the reversed direction with the rotation of the motor 101 coupled to the sun gear 113. The second-speed gear stage (second shift stage) is established by engaging the clutch 119 such that the planetary gearing 112 is integrally rotated and the bi-directional brake 120 is automatically disengaged.

The vehicle is driven in reverse by rotating the motor 101 in the reversed direction. During the backing-up, because the vehicle speed is low, the vehicle can be driven only in the first-speed gear stage (first shift stage) with the clutch 119 disengaged. Incidentally, the arrangement of the transmission 112 is not limited to the above-described one.

Still another construction of the electric driving apparatus used in the electric running control system for the electric vehicle according to the embodiment will be described below with reference to Fig. 4.

Fig. 4 is a sectional view showing still another construction of the electric driving apparatus used in the electric running control system for the electric vehicle according to the embodiment of the present invention. Note that the same reference numerals as those in Fig. 2 denote the same components.

While the motor 101 of the electric driving apparatus 8 shown in Fig. 2 is arranged coaxially with the drive shaft 109, an electric driving apparatus 8B shown in Fig. 4 includes the motor 101 and a reduction gearing 127 both arranged such that the motor shaft 107 has a different axis extending parallel to the axis of the drive shaft 109.

Still another construction of the electric driving apparatus used in the electric running control system for the electric vehicle according to the embodiment will be described below with reference to Fig. 5.

Fig. 5 is a sectional view showing still another construction of the electric driving apparatus used in the electric running control system for the electric vehicle according to the embodiment of the present invention. Note that the same reference numerals as those in Fig. 2 denote the same components.

While the motor 101 of the electric driving apparatus 8 shown in Fig. 2 is arranged coaxially with the drive shaft 109, an electric driving apparatus 8C shown in Fig. 5 includes the motor 101 and a reduction gearing 131 both arranged such that the motor shaft 107 has an axis perpendicular to the axis of the drive shaft 109.

The following description is made of (1) control of the engine and the motor in the event of a tire slip when the vehicle is driven, (2) control of the motor in the event of a tire slip when the vehicle is braked, and (3) control of the motor in the event of a tire slip when the vehicle is turned, which are executed by the running controller in the system shown in Fig. 1.

First, the contents of control of the engine and the motor in the event of a tire slip when the vehicle is driven, the control being executed by the running controller for the electric vehicle according to the embodiment, will be described below with reference to Figs. 6-12.

With reference to Figs. 6-8, a description is made of overall control contents in the control of the engine and the motor in the event of a tire slip when the vehicle is driven, the control being executed by the running controller for the electric vehicle according to the embodiment of the present invention.

Fig. 6 is a flowchart showing overall control contents in the control of the engine and the motor in the event of a tire slip when the vehicle is driven, the control being executed by the running controller for the electric vehicle according to the embodiment of the present invention. Fig. 7 is a graph for explaining a map of an accelerator opening versus demanded driving torque, which is used in the control of the engine and the motor in the event of a tire slip when the vehicle is driven, the control being executed by the running controller for the electric vehicle according to the embodiment of the present invention. Fig. 8 is a graph for explaining a region determination map based on a vehicle speed (VSP) and demanded driving torque, which is used in the control of the engine and the motor in the event of a tire slip when the vehicle is driven, the control being executed by the running controller for the electric vehicle according to the embodiment of the present invention.

The control process of Fig. 6 represents a main routine for the control of the engine and the motor in the event of a tire slip when the vehicle is driven, the main routine being executed by the ESC-CU 31.

First, in step S001, the ESC-CU 31 reads various signals representing (1) the engine driving force and the motor driving force calculated by the HEV-CU 25, (2) the motor rotation speeds detected by motor rotation speed sensors disposed in the electric driving apparatuss 8 and 9, (3) the motor currents detected by motor current sensors disposed in the electric driving apparatuss 8 and 9, and (4) the wheel speeds detected by the wheel speed sensors 17, 18, 19 and 20.

The engine driving force and the motor driving force in above (1) are calculated by the HEV-CU 25 as follows. By using the map of the accelerator opening versus the demanded driving torque shown in Fig. 7, the HEV-CU 25 calculates the demanded driving torque from the accelerator opening which is detected by the accelerator opening sensor 22 depending on the accelerator operation made by a driver. Also, by using the region determination map based on the vehicle speed (VSP) and the demanded driving torque shown in Fig. 8, the HEV-CU 25 determines a driving region of the engine and the motor based on the demanded driving torque and the vehicle speed (VSP) obtained from the acceleration sensor 24. Engine demand torque and motor demand torque are decided in accordance with a torque ratio set for each of the driving region.

Then, in step S002, the ESC-CU 31 calculates the coefficient $\mu$ of road friction in accordance with the following formula (2);

$$\mu = |(Tmotor - I \times \alpha)/(r \times W)| \qquad \dots(2)$$

where Tmotor is the motor torque, I is the inertial moment between a motor rotor and a tire, $\alpha$ is the angular acceleration of the motor rotation, r is the radius of the tire, and W is the wheel load.

The motor torque Tmotor is calculated from the motor current read in step S001. The angular acceleration $\alpha$ of the motor rotation is calculated from the rotation speed that is detected by a motor rotation sensor and is read in step S001. The inertial moment I between the motor rotor and the tire, the radius r of the tire, and the wheel load W are stored in ROM inside CPU of the HEV-CU 25. The wheel load can be obtained with a sensor for detecting the road contact load that acts on each of the left and right front wheels and left and right rear wheels.

Then, in step S003, the ESC-CU 31 determines whether any drive wheel is slipped. In the case of a four-wheel-drive vehicle, a wheel slip is determined by calculating the vehicle speed VSP from the longitudinal acceleration sensor 24, and comparing the calculated vehicle speed VSP with the wheel speeds detected by the wheel speed sensors 17, 18, 19 and 20 associated with the respective drive wheels. When any of the wheel speeds is higher than the vehicle speed VSP, this condition is regarded as meaning that the relevant wheel is slipped.

If it is determined that the drive wheel is slipped, a HEV-TCS (Hybrid-Electric-Vehicle Traction Control) subroutine is executed in step S004, and a MOTOR-TCS (Motor Traction Control) subroutine is executed in step S005. Thereafter, the end of slip control is determined in step S006. In the HEV-TCS subroutine, when the slip state is determined, the engine 1 is controlled so as to suppress the slip. Details of the HEV-TCS subroutine will be described later with reference to Fig. 9. In the MOTOR-TCS subroutine, when the slip state is determined, the motors in the electric driving trains 8 and 9 are controlled so as to suppress the slip. Details of the MOTOR-TCS subroutine will be described later with reference to Fig. 10.

In step S006, the motor demand torque Tdemand read in step S001 is compared with driving torque Tdrive obtained through MOTOR-TCS control (described later), and the end of the slip control is determined when Tdemand = Tdrive is confirmed. Additionally, if it is determined in step S003 that no slip occurs, the main routine of Fig. 6 is brought to an end.

With reference to Fig. 9, the following description is made of control contents of the HEV-TCS subroutine for the control of the engine in the event of a tire slip when the vehicle is driven, the control being executed by the running controller for the electric vehicle according to the embodiment. Note that the HEV-TCS subroutine is executed by the E-CU 26.

Fig. 9 is a flowchart showing the control contents in the control of the engine in the event of a tire slip when the vehicle is driven, the control being executed by the running controller for the electric vehicle according to the embodiment of the present invention.

First, in step S101, the E-CU 26 reads various signals, such as the accelerator position sensor signal, the electronic throttle valve position sensor signal, the engine rotation speed sensor signal, and the engine cooling water temperature signal. The accelerator position sensor signal is obtained from the accelerator opening sensor 22. The electronic throttle valve position sensor signal is obtained from the position sensor disposed in the electronic throttle body (ETB) (or valve) 14. The engine rotation speed signal is obtained from the engine rotation speed sensor disposed in association with the engine 1. The temperature of engine cooling water signal is obtained from the engine cooling water temperature sensor disposed in association with the engine 1.

Then, in step S102, the E-CU 26 determines based on the engine rotation speed sensor signal, for example, whether the engine is started. If the engine is started, the control flow proceeds to step S103.

In step S103, the E-CU 26 determines whether any of the pair of left and right wheels driven by the engine driving force is slipped. In the case of the system shown in Fig. 1, the vehicle speed VSP is compared with the wheel speeds detected by the wheel speed sensors 17 and 18 for the front wheels. If any of the wheel speeds detected by the wheel speed sensors 17 and 18 is higher than the vehicle speed VSP, this condition is regarded as meaning that the relevant wheel is slipped. Also, if the wheel speeds detected by the wheel speed sensors 17 and 18 are each higher than the vehicle speed VSP, this condition is regarded as meaning that the both the front wheels 4 and 5 are slipped.

If the wheel slip is determined in step S103, the control flow proceeds to step S104 in which the E-CU 26 controls the electronic throttle valve 14 in the closing direction until the wheel slip is suppressed. In other words, by closing the electronic throttle valve 14, the intake air amount is reduced and so is the output torque of the engine 1. As a result, the driving torque of the front wheel is reduced to lower the front wheel speed, thereby suppressing the slip.

In step S105, the E-CU 26 determines whether the electronic throttle valve 14 is fully closed. If the electronic throttle valve 14 is fully closed, the control flow proceeds to step S106 in which the E-CU 26 determines the warm-up state of the engine. If the temperature of the engine cooling water is higher than a setting value, this condition means the completion of engine warm-up, and therefore the control flow proceeds to step S107. In step S107, the E-CU 26 determines whether the motor is generating power at that time. If the motor is not generating power, the control flow proceeds to step S108 in which the engine 1 is stopped. Stated another way, when the engine is not in any state of vehicle driving, warm-up and power generation, the engine is stopped to prevent wasteful consumption of fuel by the engine. With the stop of the engine 1, the output torque of the engine 1 becomes 0 and the rotations of the front wheels 4 and 5 are stopped. As a result, the slips of the front wheels can be avoided.

On the other hand, if it is determined in step S103 that both of the pair of left and right wheels driven by the engine driving force are not slipped, or if it is determined in step S105 that the electronic throttle valve 14 is not fully closed, or if it is determined in step S106 that the temperature of the engine cooling water is lower than the setting value, or if it is determined in step S107 that the motor is generating power, the engine is not stopped.

Then, in step S109, the E-CU 26 refers to the result of the determination in step S006. If the end of slip control is determined, the E-CU 26 reads the results of the control for the engine and motor driving forces executed by the HEV-CU 25 via CAN (Controlled Area Network) 33 in step S110. In accordance with those control results, the E-CU 26 controls the engine in step S111. Thereafter, the HEV-TCS subroutine is brought to an end. Stated another way, if the end of slip control is determined in step S006, this means that the slip has been suppressed. Hence the E-CU 26 controls the engine in an ordinary manner in the same condition as that before the occurrence of the slip in step S111.

Further, even if it is determined in step S109 that the slip control is not yet completed, the HEV-TCS subroutine is brought into an end.

With reference to Figs. 10-12, the following description is made of, as a first example, control contents of the MOTOR-TCS subroutine for the control of the motor in the event of a tire slip when the vehicle is driven, the control being executed by the running controller for the electric vehicle according to the embodiment. Note that the MOTOR-TCS subroutine is executed by the M-CU 28 for controlling each of the motors in the electric driving apparatuss 8 and 9.

Fig. 10 is a flowchart showing the control contents in the control of the motor in the event of a tire slip when the vehicle is driven, the control being executed by the running controller for the electric vehicle according to the embodiment of the present invention. Fig. 11 is a graph for explaining the operation in the control of the motor in the event of a tire slip when the vehicle is driven, the control being executed by the running controller for the electric vehicle according to the embodiment of the present invention.

First, in step S201, the M-CU 28 determines whether any of the wheels driven by the motors, i.e., any of the rear wheels 6 and 7, is slipped. In the case of the system shown in Fig. 1, the vehicle speed VSP is compared with the wheel speeds detected by the wheel speed sensors 19 and 20 for the rear wheels. If any of the wheel speeds detected by the wheel speed sensors 19 and 20 is higher than the vehicle speed VSP, this condition is regarded as meaning that the relevant wheel is slipped. Also, if the wheel speeds detected by the wheel speed sensors 19 and 20 are each higher than the vehicle speed VSP, this condition is regarded as meaning that the both the rear wheels 6 and 7 are slipped.

If any of the rear wheels is slipped, the control flow proceeds to step S202 in which the M-CU 28 performs motor regenerative braking control to suppress the wheel slip. Regenerative braking torque applied at that time is given as torque obtained by subtracting a setting value from the driving torque detected at the time of occurrence of the slip. In step S203, the M-CU 28 sets a regenerative braking flag Re-Flag to be on.

Then, in step S204, the M-CU 28 determines whether the regenerative braking flag Re-Flag is set to be on or off. Because the regenerative braking flag Re-Flag = ON is set in step S203, the control flow proceeds to step S205 after the determination in step S204 in the first cycle.

Then, in step S205, the M-CU 28 differentiates the coefficient $\mu$ of road friction calculated in step S002 (to obtain a derivative value $\Delta\mu$), and determines whether the derivative value is positive or negative. If $\Delta\mu \geq 0$ is determined, i.e., if it is determined that the coefficient $\mu$ of road friction is increasing or remains maintained, the M-CU 28 refers, in step S206, to the determination result in step S006 of Fig. 6. If it is determined that the slip control is not yet completed, the control flow returns to step S204. In this case, the Re-Flag is still kept on, and therefore the control flow proceeds to step S205. Because the motor operating mode at that time is in the regenerative operation state, the slip in driving the wheel is suppressed and the slip rate is varied toward 0. In other words, as shown in Fig. 11, the coefficient $\mu$ of road friction is changed from a region (3) to (4). Though depending on the road condition, the coefficient $\mu$ of road friction is maximized at the slip rate in the range of about 10 to 20%, and it is reduced when the slip rate goes below the range of 10 to 20%.

When the coefficient $\mu$ of road friction exceeds a maximum value and starts to reduce, the M-CU 28 determines $\Delta\mu < 0$ in step S205, followed by proceeding to step S207.

In step S207, the M-CU 28 executes driving force ramp control expressed by the following formula (3);

$$Trdrive = Trmin + Tlamp \times t \qquad \dots(3)$$

where Trdrive is the driving torque, Trmin is the initial torque during powering in the TCS control, Tlamp is the torque increase amount, and t is the lapsed time. The initial torque Trmin during powering is calculated from the motor torque immediately before the detection of the slip.

Then, in step S208, the M-CU 28 sets the Re-Flag to be off. Thereafter, in step S206, the M-CU 28 refers to the determination result in step S006 of Fig. 6. If it is determined that the slip control is not yet completed, the control flow returns to step S204. Because Re-Flag = OFF is now determined in step S204, the control flow proceeds to step S209.

Because the motor is now under the driving force ramp control in step S207, the driving torque is gradually increased and the wheel slip is also gradually increased. In step S209, the M-CU 28 determines whether the derivative value of $\mu$ is positive or negative. If $\Delta\mu \geq 0$ is determined, the control flow proceeds to step S206 in which the motor driving force ramp control is continued. If the driving force is increased and the slip rate is increased correspondingly with the continued control, the coefficient $\mu$ of road friction is reduced while changing from a region (1) to (2) in Fig. 11. Accordingly, $\Delta\mu < 0$ is determined in step S209, and the control flow proceeds to step S210 in which the motor is subjected to the regenerative braking control.

Then, the M-CU 28 sets Re-Flag = ON in step S211 and refers, in step S206, to the determination result in step S006 of Fig. 6. If it is determined that the slip control is not yet completed, the control flow returns to step S204. Because Re-Flag = ON is now determined, the control flow proceeds to step S205.

As described above, by repeating the motor regenerative braking control and the motor driving force ramp control until the end of the slip control is determined in step S006, the motor driving/regenerative force control is executed such that the coefficient $\mu$ of road friction varies in the vicinity of its maximum value. Consequently, the vehicle is always able to run with the driving force in the vicinity of its maximum value.

The relationship between the slip rate and the coefficient $\mu$ of road friction depending on differences in the road condition will be described below with reference to Fig. 12.

Fig. 12 is a graph for explaining the relationship between the slip rate and the coefficient $\mu$ of road friction depending on differences in the road condition.

In the graph of Fig. 12, the horizontal axis represents the slip rate (%) and the vertical axis represents the coefficient $\mu$ of road friction. Also, alphabets A-E in the graph of Fig. 12 represent various road conditions. More specifically, A represents the road condition of a smooth icy surface, B represents the road condition of a hardened snow surface, C represents the road condition of a wet asphalt surface having a thick water film, D represents the road condition of an asphalt surface having a thin water film, and E represents the road condition of a dried asphalt surface.

Although the coefficient $\mu$ of road friction is maximized at the slip rate in the range of 10 to 20%, the slip rate at which the coefficient $\mu$ of road friction is maximized differs depending on the road conditions A-E. For example, under the road condition A of a smooth icy surface, the slip rate at which the coefficient $\mu$ of road friction is maximized is about 7%, while under the road condition E of a dried asphalt surface, it is about 22%.

In the embodiment, as described above with reference to Fig. 11, the motor driving/regenerative force control is executed by repeating the motor regenerative braking control and the motor driving force ramp control such that the coefficient $\mu$ of road friction varies in the vicinity of its maximum value. To that end, in the various road conditions shown in Fig. 12, the control is executed while a target value to which the slip rate is to be converged is changed depending on the road conditions. As a result, the vehicle is always able to run with the driving force in the vicinity of its maximum value.

Further, in the embodiment, when only one of the rear wheels in the system of Fig. 1 is slipped in the state of straightforward running being determined based on the output of the steering angle sensor 21, the ESC-CU 31 executes control for making the driving torque of the non-slipping wheel matched with the driving torque of the slip-detected wheel so that the driving forces for the left and right wheels are equal to each other.

Moreover, when the motor driving force is controlled to drive the pair of front wheels in the system shown in Fig. 1 such that the coefficient $\mu$ of road friction is held in the vicinity of its maximum value, the ESC-CU 31 may increase the motor driving torque, which is applied to the rear wheels not causing slips, in amount corresponding to the difference between the demanded driving torque obtained from the accelerator opening read in step S001 in Fig. 6 and the actual motor driving torque within the range where the wheel slip is not caused.

With reference to Figs. 13 and 14, the following description is made of, as a second example, control contents in the control of the engine and the motor in the event of a tire slip when the vehicle is driven, the control being executed by the running controller for the electric vehicle according to the embodiment.

Fig. 13 is a flowchart showing overall control contents in the control of the engine and the motor in the event of a tire slip when the vehicle is braked, the control being executed by the running controller for the electric vehicle according to the embodiment of the present invention. Fig. 14 is a flowchart showing principal control contents in the control of the engine and the motor in the event of a tire slip when the vehicle is braked, the control being executed by the running controller for the electric vehicle according to the embodiment of the present invention.

The control process of Fig. 13 shows a main routine for the control of the engine and the motor in the event of a tire slip when the vehicle is braked, and it is executed by the ESC-CU 31. The control process of Fig. 14 is executed by the M-CU 28.

First, in step S301, the ESC-CU 31 reads various signals representing each motor rotation speed, each motor current, and each wheel-speed brake SW. The motor rotation speed is detected by the motor rotation speed sensor associated with each of the electric driving apparatuss 8 and 9. The motor current is detected by the motor current sensor associated with each of the electric driving apparatuss 8 and 9. The on/off-state of each wheel-speed brake SW is detected by the brake depressing force sensor 23.

Then, in step S302, the ESC-CU 31 determines whether the brake SW is turned on or off. If the brake SW is turned off, this main routine is brought to an end. If the brake SW is turned on, the control flow proceeds to step S303 in which the motor is subjected to the regenerative braking control to obtain demanded braking torque Tddemand that is required to produce a braking force depending on the brake depressing force.

Then, in step S304, the ESC-CU 31 calculates the coefficient $\mu$ of road friction in accordance with the following formula (4);

$$\mu = |(Trmotor - I \times \alpha)/(r \times W)| \quad ...(4)$$

where Trmotor is the motor regenerative braking torque, I is the inertial moment between the motor rotor and the tire, $\alpha$ is the angular acceleration of the motor rotation, r is the radius of the tire, and W is the wheel load.

The motor regenerative braking torque Trmotor is calculated from the motor current detected by the current sensor. The angular acceleration $\alpha$ of the motor rotation is calculated from the rotation speed detected by the motor rotation sensor. The inertial moment I between the motor rotor and the tire, the radius r of the tire, and the wheel load W are stored in the ROM inside the CPU of the HEV-CU 25. The wheel load can be obtained with the sensor for detecting the road contact load that acts on each of the left and right front wheels and left and right rear wheels.

Then, in step S305, the ESC-CU 31 determines whether any wheel (tire) is slipped. A wheel slip is determined by calculating the vehicle speed VSP from the longitudinal acceleration sensor 24, and comparing the calculated vehicle speed VSP with the wheel speeds detected by the wheel speed sensors 17, 18, 19 and 20 associated with the respective wheels.

If it is determined that the wheel is slipped, a MOTOR-ABS (Motor Anti-lock Brake System) subroutine is executed in step S306, and the end of slip control is determined in step S307. Details of the MOTOR-ABS subroutine will be described later with reference to Fig. 14. The end of slip control is determined by comparing the demanded braking torque Tddemand read in step S303 with driving torque Tddrive obtained through MOTOR-ABS control (described later), and determining the end of slip control when Tddemand = Tddrive is confirmed. Additionally, if it is determined in step S305 that no slip occurs, the main routine of Fig. 13 is brought to an end.

The principal control contents of the MOTOR-ABS subroutine will be described below with reference to Fig. 14. The MOTOR-ABS subroutine is executed by the M-CU 28 for controlling each of the motors in the electric driving apparatuss 8 and 9.

First, in step S401, the M-CU 28 determines whether any of the rear wheels 6 and 7 is slipped. If both of the rear wheels are not slipped, this subroutine is brought to an end. If any of the rear wheels is slipped, the control flow proceeds to step S402.

In step S402, the M-CU 28 reduces the motor regenerative braking torque (force) to a setting value stored in ROM inside the M-CU 28. The setting value is set depending on the coefficient $\mu$ of road friction at the time of detection of the slip. The smaller the coefficient $\mu$ of road friction at the time of detection of the slip, the smaller is the setting value. Because the motor regenerative braking torque is reduced, the wheel slip is suppressed.

Then, in step S403, the M-CU 28 sets a motor regenerative braking torque down-flag Dn-Flag to be on. Thereafter, in step S404, the M-CU 28 determines whether the motor regenerative braking torque down-flag Dn-Flag is set to be on or off. Because the motor regenerative braking torque down-flag Dn-Flag = ON is set in step S403, the control flow proceeds to step S405 after the determination in step S404 in the first cycle.

Then, in step S405, the M-CU 28 differentiates the coefficient $\mu$ of road friction and determines whether the derivative value $\Delta\mu$ is positive or negative. If $\Delta\mu \geq 0$ is determined, i.e., if it is determined that the coefficient $\mu$ of road friction is increasing or remains maintained, the M-CU 28 refers, in step S406, to the determination result in step S307 of Fig. 13. If it is determined that the slip control is not yet completed, the control flow returns to step S404.

In this case, the Dn-Flag is still kept on, and therefore the control flow proceeds to step S405. Because the motor regenerative braking torque is in a reduced state at that time, the slip in braking the wheel is suppressed and the slip rate is varied toward 0. In other words, the coefficient $\mu$ of road friction is changed from the region (3) to (4) in Fig. 11.

When the coefficient $\mu$ of road friction exceeds a maximum value and starts to reduce, the M-CU 28 determines $\Delta\mu < 0$ in step S405, followed by proceeding to step S407.

In step S407, the M-CU 28 restores the regenerative torque so that the motor regenerative braking torque is equal to the demanded braking torque Tddemand. In step S408, the M-CU 28 sets the Dn-Flag to be off. Thereafter, in step S406, the M-CU 28 refers to the determination result in step S307 of Fig. 13. If it is determined that the slip control is not yet completed, the control flow returns to step S404. Because Dn-Flag = OFF is now determined in step S404, the control flow proceeds to step S409.

Because the regenerative torque is gradually increased, the wheel slip is also gradually increased. In step S409, the M-CU 28 determines whether the derivative value of the coefficient $\mu$ of road friction is positive or negative. If $\Delta\mu \geq 0$ is determined, the control flow proceeds to step S406 in which the motor braking force ramp control is continued. If the braking force is increased and the slip rate is increased correspondingly with the continued ramp control, the coefficient $\mu$ of road friction is reduced while changing from the region (1) to (2) in Fig. 11. Accordingly, $\Delta\mu < 0$ is determined in step S409, and the control flow proceeds to step S410 in which the motor regenerative braking torque is reduced to the setting value stored in the ROM inside the M-CU 28. The setting value is set depending on the coefficient $\mu$ of road friction at the time of detection of the slip. Because the motor regenerative braking torque is reduced, the wheel slip is suppressed.

Then, the M-CU 28 sets Dn-Flag = ON in step S411 and refers, in step S406, to the determination result in step S307 of Fig. 13. If it is determined that the slip control is not yet completed, the control flow returns to step S404. Dn-Flag = ON is now determined, and therefore the control flow proceeds to step S405.

As described above, by repeating the motor regenerative braking-force reduction control and the motor regenerative braking-force ramp control until the end of the slip control is determined in step S307, the motor regenerative torque control is executed such that the coefficient $\mu$ of road friction varies in the vicinity of its maximum value. In other words, taking into account the various road conditions shown in Fig. 12, the slip control is executed while changing a target value to which the slip rate is to be converged, depending on each of the road conditions. As a result, the vehicle is always able to run with the driving force in the vicinity of its maximum value.

When only one of the rear wheels in the system of Fig. 1 is slipped in the state of straightforward running being determined based on the output of the steering angle sensor 21, the ESC-CU 31 executes control for making the regenerative braking torque of the non-slipping wheel matched with the regenerative braking torque of the slip-detected wheel so that the braking forces for the left and right wheels are equal to each other.

Further, when the motor regenerative braking torque is controlled to brake the pair of front wheels in the system shown in Fig. 1 such that the coefficient $\mu$ of road friction is held in the vicinity of its maximum value, the ESC-CU 31 may increase the motor regenerative braking torque, which is applied to the rear wheels not causing slips, in amount corresponding to the difference between the demanded braking torque obtained from the brake depressing force read in step S301 in Fig. 13 and the actual motor regenerative braking torque within the range where the wheel slip is not caused.

With reference to Figs. 15-21, the following description is made of, as a third example, control contents in the control of the engine and the motor in the event of a tire slip when the vehicle is turned, the control being executed by the running controller for the electric vehicle according to the embodiment.

Fig. 15 is a flowchart showing overall control contents in the control of the engine and the motor in the event of a tire slip when the vehicle is turned, the control being executed by the running controller for the electric vehicle according to the embodiment of the present invention. Fig. 16 is a flowchart showing principal control contents in the control of the engine and the motor in the event of a tire slip when the vehicle is turned, the control being executed by the running controller for the electric vehicle according to the embodiment of the present invention. Fig. 17 is a graph for explaining a map of a brake depressing force versus demanded braking torque, which is used in the control of the engine and the motor in the event of a tire slip when the vehicle is turned, the control being executed by the running controller for the electric vehicle according to the embodiment of the present invention. Fig. 18 is a graph for explaining a map of a steering angle versus difference in braking torque between the left and right sides, which is used in the control of the engine and the motor in the event of a tire slip when the vehicle is turned, the control being executed by the running controller for the electric vehicle according to the embodiment of the present invention. Fig. 19 is a graph for explaining a map of an accelerator opening versus demanded driving torque, which is used in the control of the engine and the motor in the event of a tire slip when the vehicle is turned, the control being executed by the running controller for the electric vehicle according to the embodiment of the present invention. Fig. 20 is a graph for explaining a map of a steering angle versus difference in driving torque between left and right motors, which is used in the control of the engine and the motor in the event of a tire slip when the vehicle is turned, the control being executed by the running controller for the electric vehicle according to the embodiment of the present invention. Fig. 21 is a graph for explaining a map of a steering angle versus motor driving torque of an outer wheel in turning and motor regenerative braking torque of an inner wheel in turning, which is used in the control of the engine and the motor in the event of a tire slip when the vehicle is turned, the control being executed by the running controller for the electric vehicle according to the embodiment of the present invention.

The control process of Fig. 15 shows a main routine for the control of the engine and the motor in the event of a tire slip when the vehicle is turned, and it is executed by the ESC-CU 31. The control process of Fig. 16 is executed by the M-CU 28.

First, in step S501, the ESC-CU 31 reads various signals representing the steering angle, the accelerator opening, the on/off-state of each wheel-speed brake SW, and the brake depressing force. The steering angle is detected by the steering angle sensor 21. The accelerator opening is detected by the accelerator opening sensor 22. The on/off-state of each wheel-speed brake SW and the brake depressing force are detected by the brake depressing force sensor 23.

Then, in step S502, the ESC-CU 31 determines the presence or absence of steering operation based on the steering angle. If the absence of steering operation is determined, this means that the vehicle runs straightforward, and the main routine is brought to an end. If the presence of steering operation is determined, this is regarded as meaning the vehicle runs while turning, and the control flow proceeds to step S503 in which the on/off-state of the brake SW is determined in step S503.

If the brake SW is not turned off, i.e., if brake SW = ON is determined, this condition means that the vehicle is in the operating state where the vehicle runs while turning under deceleration. Therefore, the ESC-CU 31 controls the motors for the left and right wheels in step S507 according to procedures A), B) and C) as follows.

In step S507, A) the ESC-CU 31 first obtains the demanded braking torque from the brake depressing force based on the map, shown in Fig. 17, representing the relationship between the brake depressing force and the demanded braking torque. Here, the demanded braking torque is a total value of the regenerative braking torques of the left and right motors. B) The ESC-CU 31 then obtains the difference in braking torque between the left and right sides from the steering angle based on the map, shown in Fig. 18, representing the relationship between the steering angle and the difference in braking torque between the left and right sides. Here, the difference in braking torque between the left and right sides is the difference in regenerative braking torque between the left and right motors. C) The ESC-CU 31 then sets the relationship of (motor regenerative braking torque for outer wheel in turning < motor regenerative braking torque for inner wheel in turning).

By thus giving the difference in motor regenerative braking torque between the inner and outer wheels in turning, it is possible to generate a turn moment in the vehicle and to improve the turning performance of the vehicle.

On the other hand, if brake SW = OFF is determined in step S503, the ESC-CU 31 determines in step S504 whether the accelerator opening is over 0 (i.e., opened) or 0 (i.e., fully closed). If the accelerator opening is over 0, this condition means that vehicle runs while turning under acceleration or coasting at a constant speed. Therefore, the ESC-CU 31 controls the motors for the left and right wheels in step S505 according to procedures A), B) and C) as follows. A) The ESC-CU 31 first obtains the demanded driving torque from the accelerator opening based on the map, shown in Fig. 19, representing the relationship between the accelerator opening and the demanded driving torque. Here, the demanded driving torque is a total value of the driving torques of the left and right motors. B) The ESC-CU 31 then obtains the difference in driving torque between the left and right motors from the steering angle based on the map, shown in Fig. 20, representing the relationship between the steering angle and the difference in driving torque between the left and right motors. C) The ESC-CU 31 then sets the relationship of (motor driving torque for outer wheel in turning > motor driving torque for inner wheel in turning).

By thus giving the difference in driving torque between the inner and outer wheels in turning, it is possible to generate a turn moment in the vehicle and to improve the turning performance of the vehicle.

Further, if it is determined in step S504 that the accelerator opening is fully closed, this means that the vehicle runs while turning under coasting. Therefore, the ESC-CU 31 obtains the motor driving torque of the outer wheel in turning and the motor regenerative braking torque of the inner wheel in turning from the steering angle based on the map, shown in Fig. 21, representing the relationship of the steering angle versus the motor driving torque of the outer wheel in turning and the motor regenerative braking torque of the inner wheel in turning. At this time, the driving torque is generated by the motor for the outer wheel in turning, and the regenerative braking torque is generated by the motor for the inner wheel in turning. In addition, respective absolute values of the driving torque generated in the motor for the outer wheel in turning and the regenerative braking torque in the motor for the inner wheel in turning are made equal to each other. Thus, by making the driving torque and the regenerative braking torque equal to each other, the vehicle can be prevented from undergoing acceleration/deceleration due to unbalance in motor torque. Also, by giving the difference between the torques generated by the motors for the inner and outer wheels in turning, it is possible to generate a turn moment in the vehicle and to improve the turning performance of the vehicle.

Each of steps S505, S506 and S507 represents a series of processes given below. A driving or regenerative-braking command is outputted from the ESC-CU 31 to the HEV-CU 25, and the HEV-CU 25 calculates a driving torque value or a regenerative braking torque value. The M-CU 28 reads the driving torque value or the regenerative braking torque value and executes the control of the motor.

Then, in step S508, the ESC-CU 31 determines whether any wheel (tire) is slipped. If a wheel slip is determined, it is determined in step S509 whether the tire slip is caused during the driving or braking.

In the case of the driving, the MOTOR-TCS control shown in Fig. 10 is executed in step S510, and in the case of the braking, the MOTOR-ABS control shown in Fig. 14 is executed in step S511.

Then, the M-CU 28 executes driving/regenerative control for the non-slipping wheel in step S512, and then determines the end of the slip control in step S513. Details of the driving/regenerative control for the non-slipping wheel will be described later with reference to Fig. 16. The end of the slip control is determined when the motor driving torque or the motor regenerative braking torque obtained in step S505, S506 or S507 is equal to the motor driving torque or the motor regenerative braking torque obtained through the ramp control in step S510 or S511. Upon the determination of the end of the slip control, the main routine of Fig. 15 is brought to an end.

The motor driving/regenerative control for the non-slipping wheel will be described below with reference to Fig. 16.

First, in step S601, the M-CU 28 reads, from the HEV-CU 25, a target value of the driving or regenerative torque difference between the left and right wheels based on the steering angle, the on/off-state of each wheel-speed brake SW, and the accelerator opening. More specifically, that target value is obtained from Fig. 18 when the vehicle runs while turning under deceleration, or from Fig. 20 when the vehicle runs under acceleration or coasting at a constant speed. In addition, when the vehicle runs while turning under coasting, the driving or regenerative torque difference between the left and right wheels is 0 as shown in Fig. 21.

Then, in step S602, the M-CU 28 reads the driving torque or the regenerative torque of the slipped wheel from the M-CU that controls the motor for the slipped wheel.

Then, in step S603, the M-CU 28 calculates, based on the driving torque or the regenerative torque of the slipped wheel, the driving torque or the regenerative torque of the non-slipping wheel and executes the control of the motor so that the driving or regenerative torque difference obtained in step S601 is produced. Stated another way, when any of the inner and outer wheels in turning is slipped in the state of the vehicle running while turning, the driving torque or the regenerative torque of the non-slipping wheel is controlled based on the driving torque or the braking torque of the slipped wheel so as to realize the torque difference between the inner and outer wheels in turning, which is obtained from the steering angle. As a result, a turn moment can be generated depending on the steering angle, and the turning performance of the vehicle is stabilized even in the occurrence of the tire slip.

Other constructions of the electric vehicle equipped with the running controller and the electric running control system for the electric vehicle according to the embodiment of the present invention will be described below with reference to Figs. 22-28.

Fig. 22 is a system block diagram showing the construction of a second example of the electric vehicle equipped with the running controller and the electric running control system for the electric vehicle according to the embodiment of the present invention. Fig. 23 is a system block diagram showing the construction of a third example of the electric vehicle equipped with the running controller and the electric running control system for the electric vehicle according to the embodiment of the present invention. Fig. 24 is a system block diagram showing the construction of a fourth example of the electric vehicle equipped with the running controller and the electric running control system for the electric vehicle according to the embodiment of the present invention. Fig. 25 is a system block diagram showing the construction of a fifth example of the electric vehicle equipped with the running controller and the electric running control system for the electric vehicle according to the embodiment of the present invention. Fig. 26 is a system block diagram showing the construction of a sixth example of the electric vehicle equipped with the running controller and the electric running control system for the electric vehicle according to the embodiment of the present invention. Fig. 27 is a system block diagram showing the construction of a seventh example of the electric vehicle equipped with the running controller and the electric running control system for the electric vehicle according to the embodiment of the present invention. Fig. 28 is a system block diagram showing the construction of an eighth example of the electric vehicle equipped with the running controller and the electric running control system for the electric vehicle according to the embodiment of the present invention. Note that the same reference numerals in Fig. 1 denote the same components.

Fig. 22 shows an example of a hybrid electric vehicle in which the front wheels 4 and 5 are driven by the engine (ENG) 1 and two electric driving trains (EDT) 8 and 9. The driving force of the engine 1 is reduced in rotational speed by the transmission 3 and is transmitted to the front wheels 4 and 5, thereby driving the front wheels 4 and 5. The transmission 3 includes a differential mechanism. Also, the front left wheel 4 is driven by the electric driving train 8, and the front right wheel 5 is driven by the electric driving train 9. A motor generator (M/G) 2A is driven by the engine 1 to operate as a generator, and the generated power is accumulated in the battery. Further, the motor generator (M/G) 2A is driven by electric power from the battery to restart the engine 1.

Fig. 23 shows an example of an electric vehicle in which the front left wheel 4 and the front right wheel 5 are driven respectively by the electric driving trains (EDT) 8 and 9.

Fig. 24 shows another example of the hybrid electric vehicle in which the rear wheels 6 and 7 are driven by the engine (ENG) 1 and two electric driving trains (EDT) 8 and 9. The driving force of the engine 1 is reduced in rotational speed by the transmission 3 and is transmitted to the rear wheels 6 and 7 through a differential mechanism 34, thereby driving the rear wheels 6 and 7. The differential mechanism 34 is included in the transmission 3. Also, the rear left wheel 6 is driven by the electric driving train 8, and the rear right wheel 7 is driven by the electric driving train 9. The motor generator (M/G) 2A is driven by the engine 1 to operate as a generator, and the generated power is accumulated in the battery. Further, the motor generator (M/G) 2A is driven by electric power from the battery to restart the engine 1.

Fig. 25 shows another example of the electric vehicle in which the rear left wheel 6 and the rear right wheel 7 are driven respectively by the electric driving trains (EDT) 8 and 9.

Fig. 26 shows an example of a four-wheel-drive electric vehicle in which, in addition to the front-wheel-drive hybrid electric vehicle shown in Fig. 22, the rear left wheel 6 and the rear right wheel 7 are driven respectively by other two electric driving trains (EDT) 8' and 9'.

Fig. 27 shows another example of the four-wheel-drive electric vehicle in which, in addition to the rear-wheel-drive hybrid electric vehicle shown in Fig. 24, the front left wheel 4 and the front right wheel 5 are driven respectively by other two electric driving trains (EDT) 8' and 9'.

Fig. 28 shows still another example of the four-wheel-drive electric vehicle in which, in addition to the front-wheel-drive hybrid electric vehicle shown in Fig. 23, the rear left wheel 6 and the rear right wheel 7 are driven respectively by other two electric driving trains (EDT) 8' and 9'.

In any of the electric vehicles shown in Figs. 22-28, the embodiment described above with reference to Figs. 1-21 can be practiced in a similar manner. Namely, by executing the motor driving/regenerative force control so as to maintain the coefficient $\mu$ of road friction in the vicinity of its maximum value, the electric vehicle can be controlled such that, in the various road conditions, a target value to which the slip rate is to be converged is changed depending on the road conditions. As a result, the vehicle is always able to run with the driving force in the vicinity of its maximum value. It to be noted that practical constructions of the present invention are not limited to the above-described embodiment, and modifications, additions, etc. within the scope of the present invention are also involved in the present invention.

Thus, according to the embodiment, in the event of a tire slip during driving or braking of the vehicle, the motor driving force and the motor regenerative force are controlled such that the coefficient $\mu$ of road friction of each tire is always maintained in the vicinity of its maximum value. It is therefore possible to prevent unstable vehicle behaviors caused by a tire slip. Also, since the vehicle is always able to run over roads under any of various conditions with the tire driving torque and the tire braking torque held at maximum values, maximum driving and braking performance can be realized. In other words, since maximum acceleration is obtained, the vehicle is able to run over bad muddy roads without being stuck, or the vehicle can be positively moved out of the stuck state. Additionally, in the case of braking, the vehicle can be stopped with a minimum braking distance.

Further, in match with the motor control for slipped one of paired wheels, motor torque for the other non-slipping wheel is modified depending on the running state, such as straightforward running and turning. Therefore, vehicle behaviors can be obtained as per the driver's estimation, and satisfactory driving performance and safety performance can be realized.

Moreover, when the wheel driven by the engine is slipped, the engine is stopped and that wheel is driven by the motor such that the coefficient $\mu$ of road friction is always maintained in the vicinity of its maximum value. Hence wasteful fuel consumption can be suppressed.

## Claims

1. A running controller for an electric vehicle in which a wheel (4, 5, 6, 7) is driven and braked through control of an electric driving apparatus (8, 9) including a motor (101),
wherein said running controller includes control means (25, 26, 27, 28, 31) for executing powering and regenerative control of said motor (101) to change, depending on road conditions, a target value to which a slip rate is to be converged, when slipping of the wheel (4, 5, 6, 7) is detected.

2. The running controller for the electric vehicle according to Claim 1, wherein said control means (25, 26, 27, 28, 31) calculates the coefficient $\mu$ of road friction based on a motor current and executes the powering and regenerative control of said motor (101) such that the calculated coefficient $\mu$ of road friction is maintained in the vicinity of a maximum value thereof.

**3.** The running controller for the electric vehicle according to Claim 1 or 2, wherein said control means (25, 26, 27, 28, 31) performs regenerative braking of said motor (101) of said electric driving apparatus (8, 9) when slipping of the wheel is detected in a state of said electric vehicle being driven by said motor (101) of said electric driving apparatus (8, 9);
said control means (25, 26, 27, 28, 31) performs powering control of said motor (101) of said electric driving apparatus (8, 9) when a reversal of a value of the coefficient μ of road friction from an increase to a decrease is detected during said regenerative braking; and
said control means (25, 26, 27, 28, 31) performs regenerative braking of said motor (101) of said electric driving apparatus (8, 9) again when a reversal of a value of the coefficient μ of road friction from an increase to a decrease is detected during said powering control.

**4.** The running controller for the electric vehicle according to at least one of the preceding Claims, wherein said electric vehicle drives a wheel (4, 5, 6, 7) by an engine having an electronic throttle valve (14); and
when slipping of the wheel driven by said engine is detected, said control means (25, 26, 27, 28, 31) controls said electronic throttle valve (14) in a valve closing direction until the slipping of the wheel (4, 5, 6, 7) is suppressed, thereby reducing an output of said engine, and
said control means (25, 26, 27, 28, 31) executes the powering and regenerative control of said motor (101) such that the coefficient μ of road friction is maintained in the vicinity of the maximum value thereof.

**5.** The running controller for the electric vehicle according to Claim 4, wherein when said electronic throttle valve (14) is substantially fully closed as a result of controlling said electronic throttle valve (14) in the valve closing direction until the slipping of the wheel (4, 5, 6, 7) is suppressed, said control means (25, 26, 27, 28, 31) stops said engine and drives the wheel for running of said electric vehicle by said motor (101) of said electric driving apparatus (8, 9).

**6.** The running controller for the electric vehicle according to at least one of the preceding Claims, wherein said electric vehicle includes a steering angle sensor (21) for detecting a steering angle applied from a driver;
said electric driving apparatus (8, 9) drives a pair of left (4, 6) and right wheels (5, 7) independently of each other;
said control means (25, 26, 27, 28, 31) executes the powering and regenerative control of said motor (101) of said electric driving apparatus (8, 9) such that the calculated coefficient μ of road friction is maintained in the vicinity of the maximum value thereof, when slipping of any one of the pair of left (4, 6) and right wheels (5, 7) is detected; and
said control means (25, 26, 27, 28, 31) sets motor torque for driving non-slipping one of the pair of left and right wheels to be substantially equal to motor torque for driving the other wheel when straightforward running of said electric vehicle is detected based on a signal from said steering angle sensor (21).

**7.** The running controller for the electric vehicle according to at least one of the preceding Claims, wherein said control means (25, 26, 27, 28, 31) weakens a regenerative braking force of said motor (101) of said electric driving apparatus (8, 9) when slipping of the wheel (4, 5, 6, 7) is detected in a state of said electric vehicle being braked by motor regenerative braking in said electric driving apparatus (8, 9);
said control means strengthens the regenerative braking force of said motor (101) of said electric driving apparatus (8, 9) when a reversal of a value of the coefficient μ of road friction from an increase to a decrease is detected after weakening the regenerative braking force; and
said control means (25, 26, 27, 28, 31) weakens the motor regenerative braking force again when a reversal of a value of the coefficient μ of road friction from an increase to a decrease is detected after strengthening the motor regenerative braking force.

**8.** The running controller for the electric vehicle according to at least one of the preceding Claims, wherein said electric vehicle includes a steering angle sensor (21) for detecting a steering angle applied from a driver;
said electric driving apparatus (8, 9) drives a pair of left (4, 6) and right wheels (5, 7) independently of each other;
said control means (25, 26, 27, 28, 31) executes the regenerative control of said motor (101) of said electric driving apparatus (8, 9) such that the calculated coefficient μ of road friction is maintained in the vicinity of the maximum value thereof, when slipping of any one of the pair of left (4, 6) and right wheels (5, 7) is detected; and
said control means sets motor regenerative torque in said electric driving apparatus (8, 9) for braking non-slipping one of the pair of left (4, 6) and right wheels (5, 7) to be substantially equal to motor regenerative torque for braking the other wheel when straightforward running of said electric vehicle is detected based on a signal from said steering angle sensor (21).

**9.** The running controller for the electric vehicle according to at least one of the Claims 3 - 8, wherein when turning of said electric vehicle is detected based on the signal from said steering angle sensor (21), said control means (25, 26, 27, 28, 31) gives a difference in motor driving torque or regenerative torque between left and right electric driving apparatus (8, 9) to generate a vehicle turn moment due to the torque difference, thereby assisting said electric vehicle to turn; and
when said control means controls, upon detection of slipping of any one of the pair of left (4, 6) and right wheels (5, 7), the motor torque generated by said motor (101) of each of said electric driving apparatus (8, 9) such that the calculated coefficient $\mu$ of road friction is maintained in the vicinity of the maximum value thereof, said control means (25, 26, 27, 28, 31) modifies the motor torque of the other non-slipping wheel such that a target turn moment set depending on the steering angle is obtained.

**10.** An electric running control system for an electric vehicle in which a wheel (4, 5, 6, 7) is driven and braked through control of an electric driving apparatus (8, 9) including a motor (101), said electric running control system comprising:

said electric driving apparatus (8, 9);
motor control means (28) for controlling electric power supplied to said electric driving apparatus; and
a running controller (25, 26, 27, 28, 31) for controlling said motor control means,
said running controller including control means (31) for executing powering and regenerative control of said motor to change, depending on road conditions, a target value to which a slip rate is to be converged, when slipping of the wheel is detected.

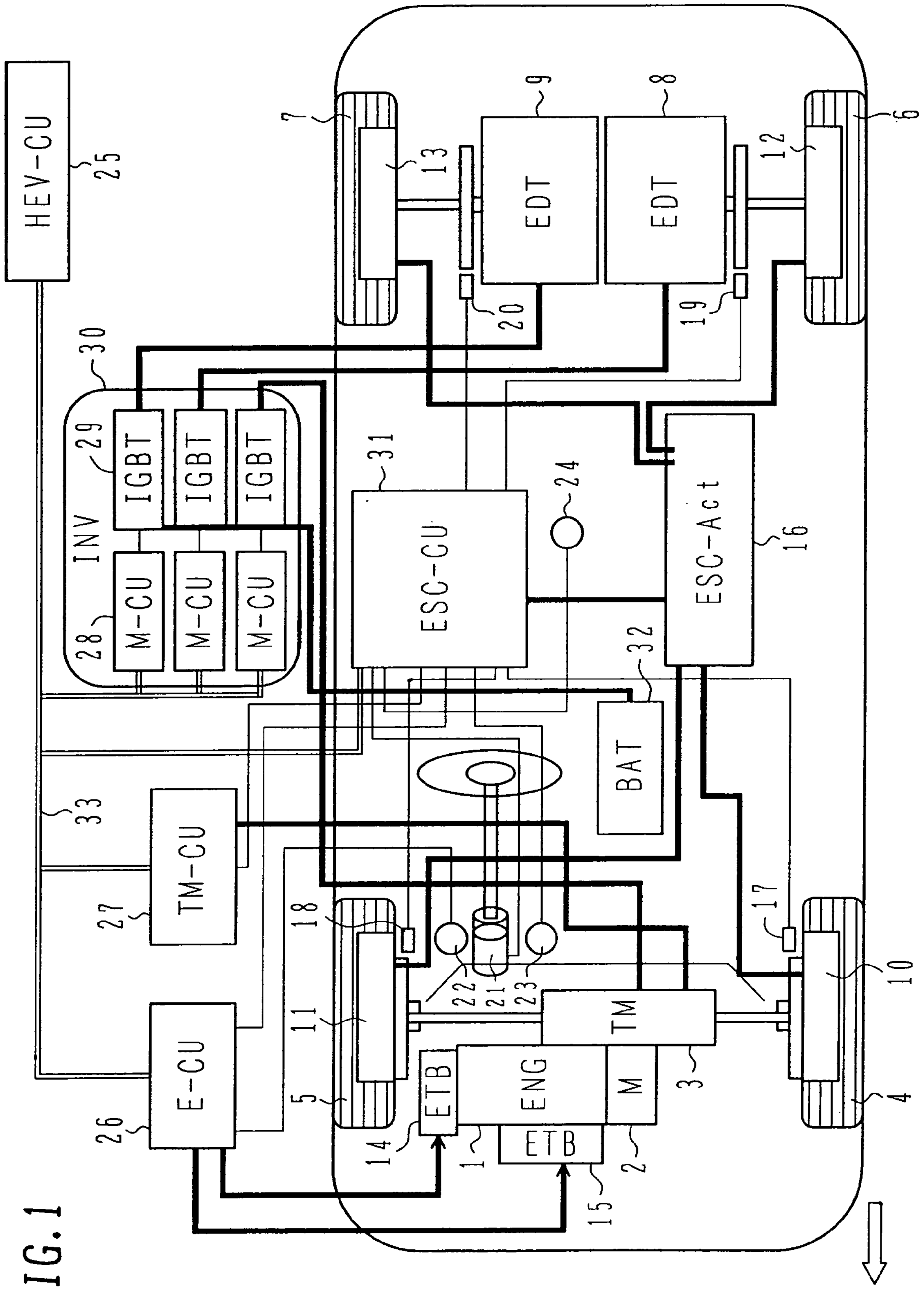
HEV-CU
25
30
29
IGBT
IGBT
IGBT
INV
28
M-CU
M-CU
M-CU
31
ESC-CU
24
ESC-Act
16
32
BAT
33
TM-CU
27
E-CU
26
9
8
EDT
EDT
7
13
12
6
20
19
18
17
22
21
23
11
10
TM
ENG
M
ETB
ETB
5
4
3
14
1
2
15

FIG.1

FIG. 2

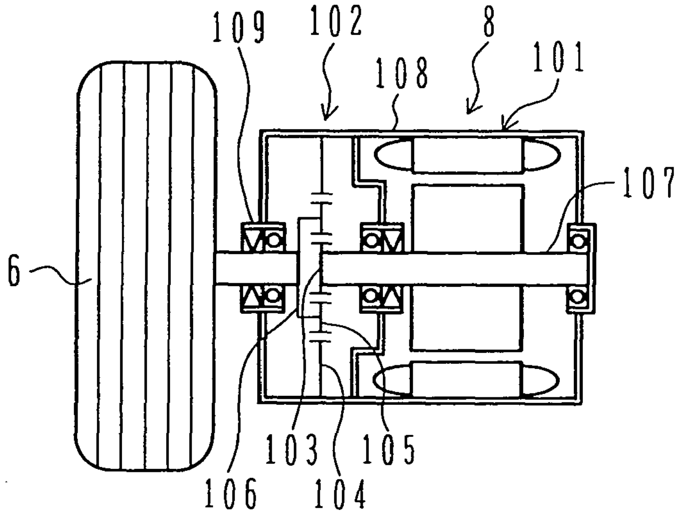
109
102
8
108
101
107
6
103
105
106
104

FIG. 3

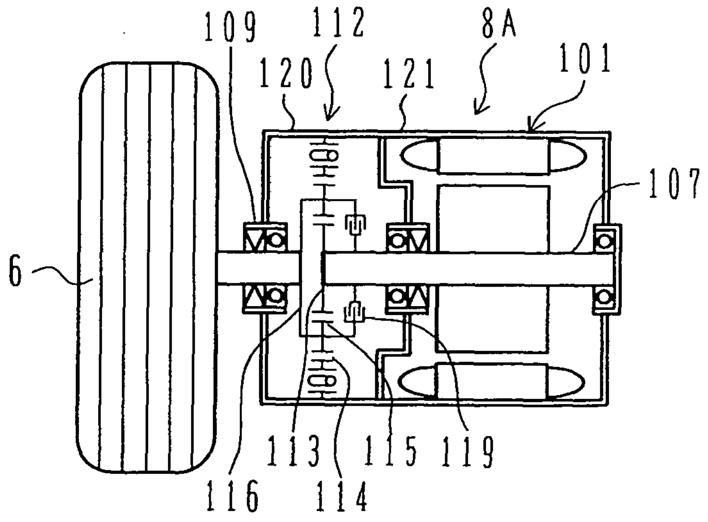
109
112
8A
120
121
101
107
6
113
115
119
116
114

FIG.4

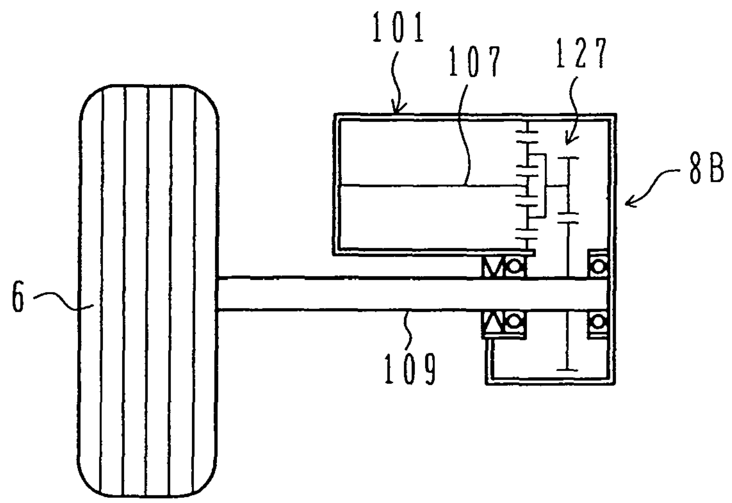


FIG.5

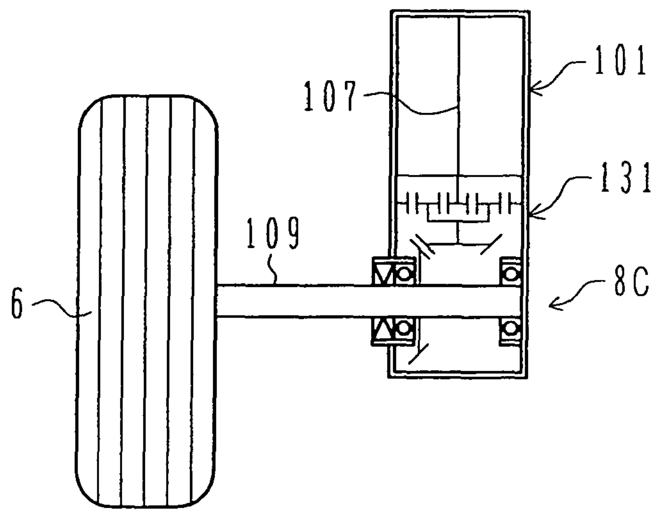

FIG. 6

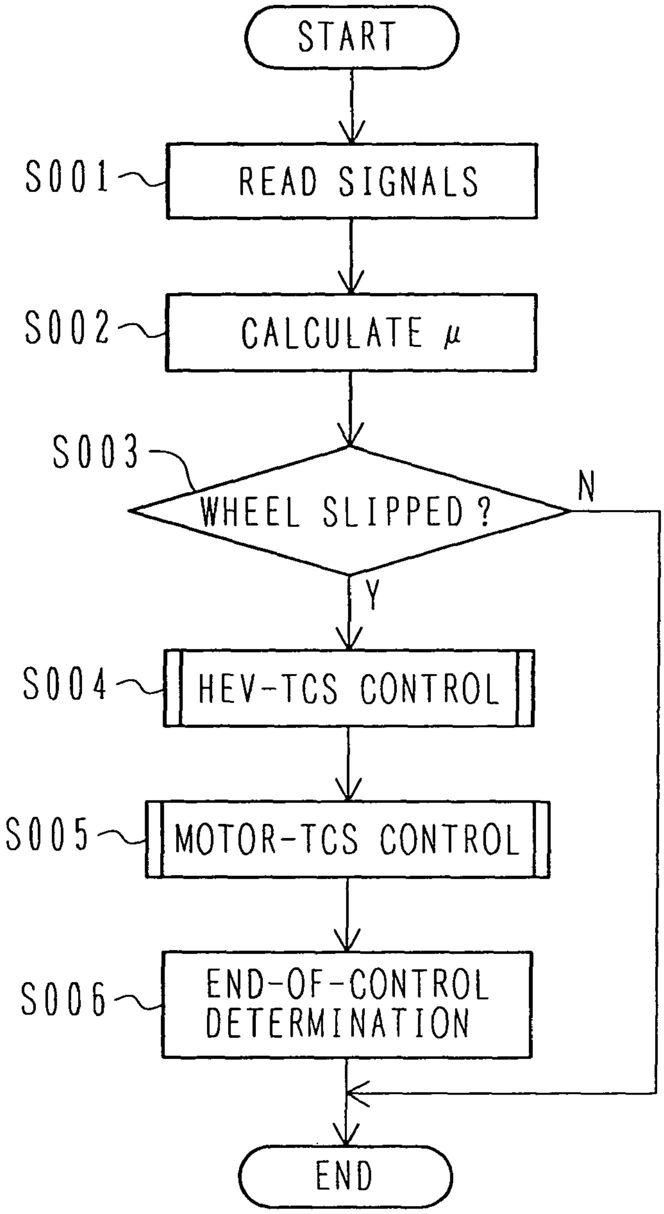
START
S001
READ SIGNALS
S002
CALCULATE μ
S003
WHEEL SLIPPED ?
N
Y
S004
HEV-TCS CONTROL
S005
MOTOR-TCS CONTROL
S006
END-OF-CONTROL DETERMINATION
END

FIG.7

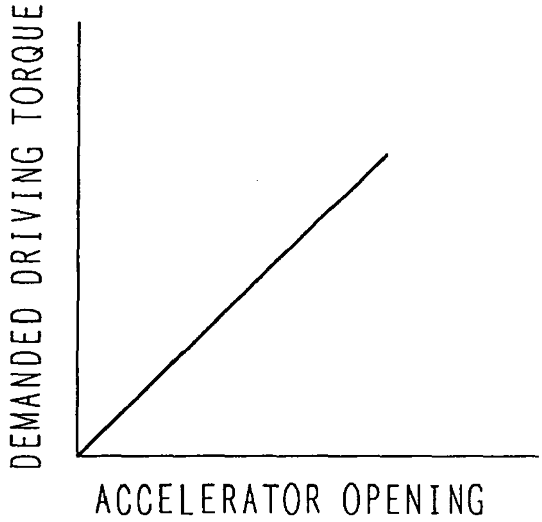
DEMANDED DRIVING TORQUE
ACCELERATOR OPENING

FIG.8

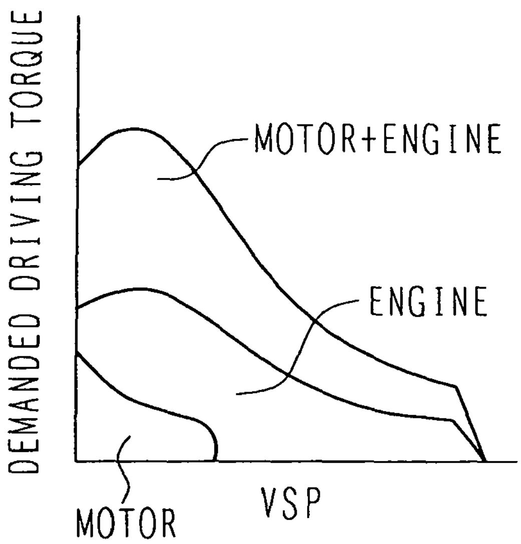
DEMANDED DRIVING TORQUE
MOTOR+ENGINE
ENGINE
MOTOR
VSP

FIG. 9

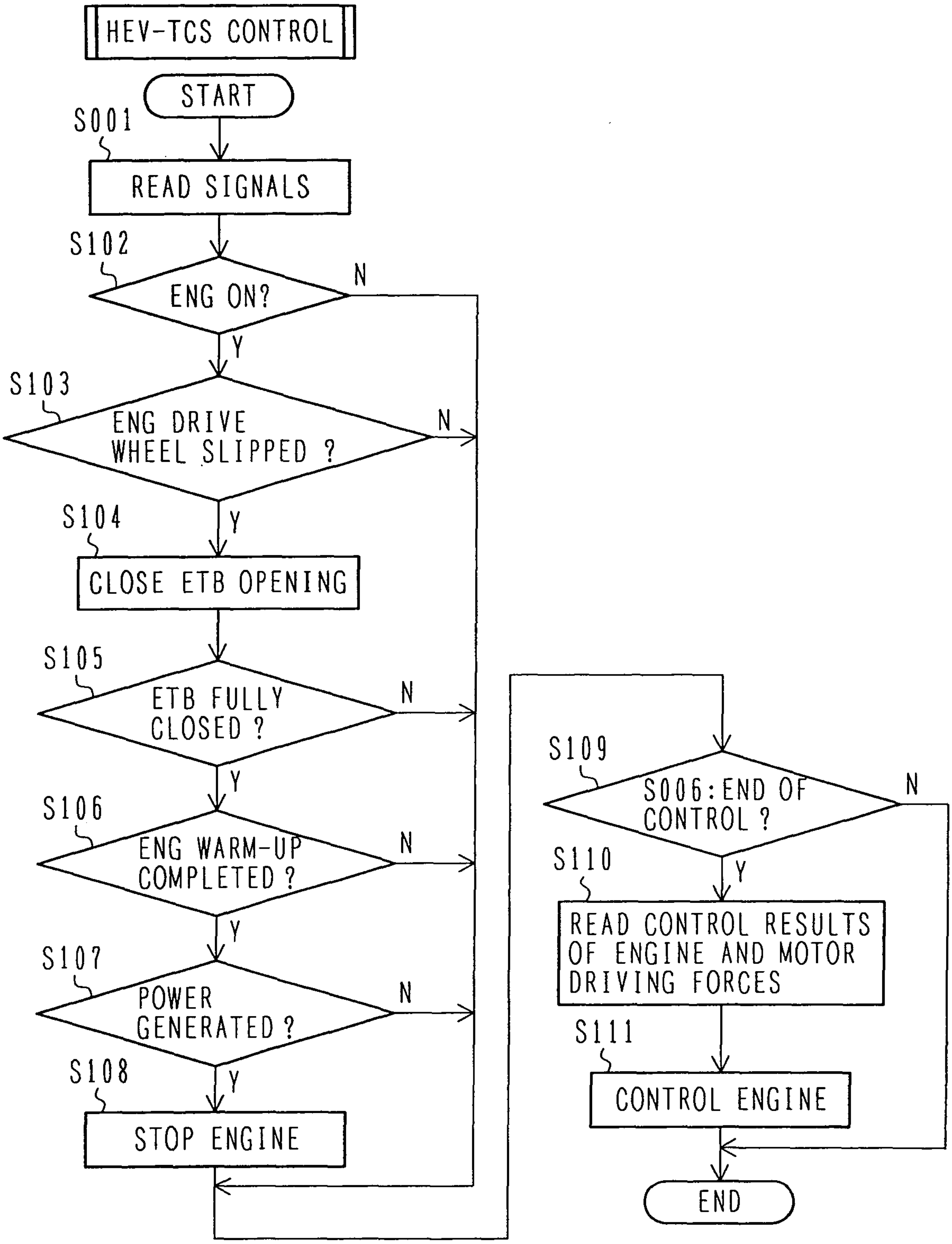
HEV-TCS CONTROL
START
S001
READ SIGNALS
S102
ENG ON?
N
Y
S103
ENG DRIVE WHEEL SLIPPED ?
N
Y
S104
CLOSE ETB OPENING
S105
ETB FULLY CLOSED ?
N
Y
S106
ENG WARM-UP COMPLETED ?
N
Y
S107
POWER GENERATED ?
N
Y
S108
STOP ENGINE
S109
S006:END OF CONTROL ?
N
Y
S110
READ CONTROL RESULTS OF ENGINE AND MOTOR DRIVING FORCES
S111
CONTROL ENGINE
END

FIG.10

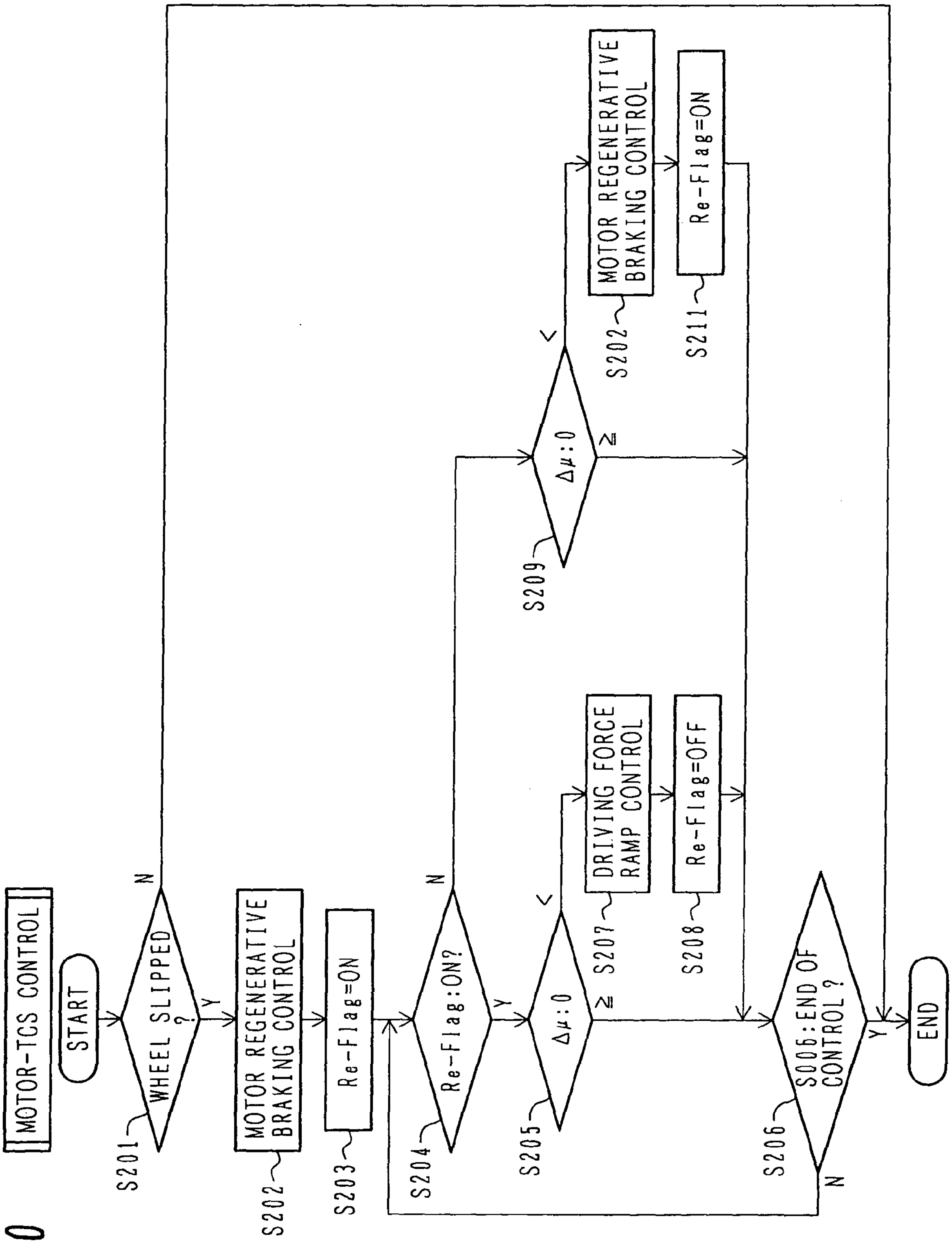
MOTOR-TCS CONTROL
START
S201
WHEEL SLIPPED ?
Y
N
S202
MOTOR REGENERATIVE BRAKING CONTROL
S203
Re-Flag=ON
S204
Re-Flag:ON?
Y
N
S205
Δμ:0
≧
<
S207
DRIVING FORCE RAMP CONTROL
S208
Re-Flag=OFF
S209
Δμ:0
≧
<
S202
MOTOR REGENERATIVE BRAKING CONTROL
S211
Re-Flag=ON
S206
S006:END OF CONTROL ?
Y
N
END

FIG.11

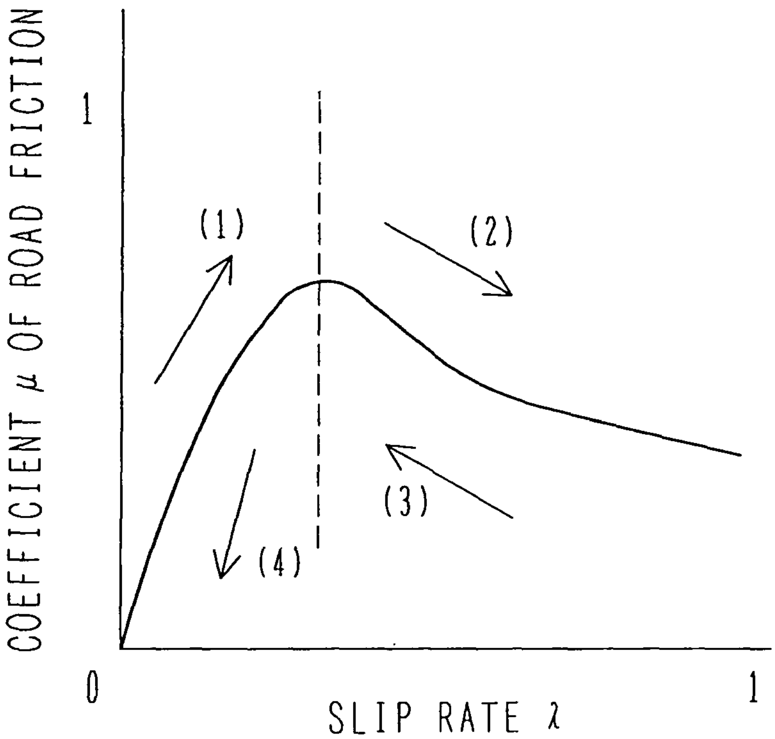

FIG.12

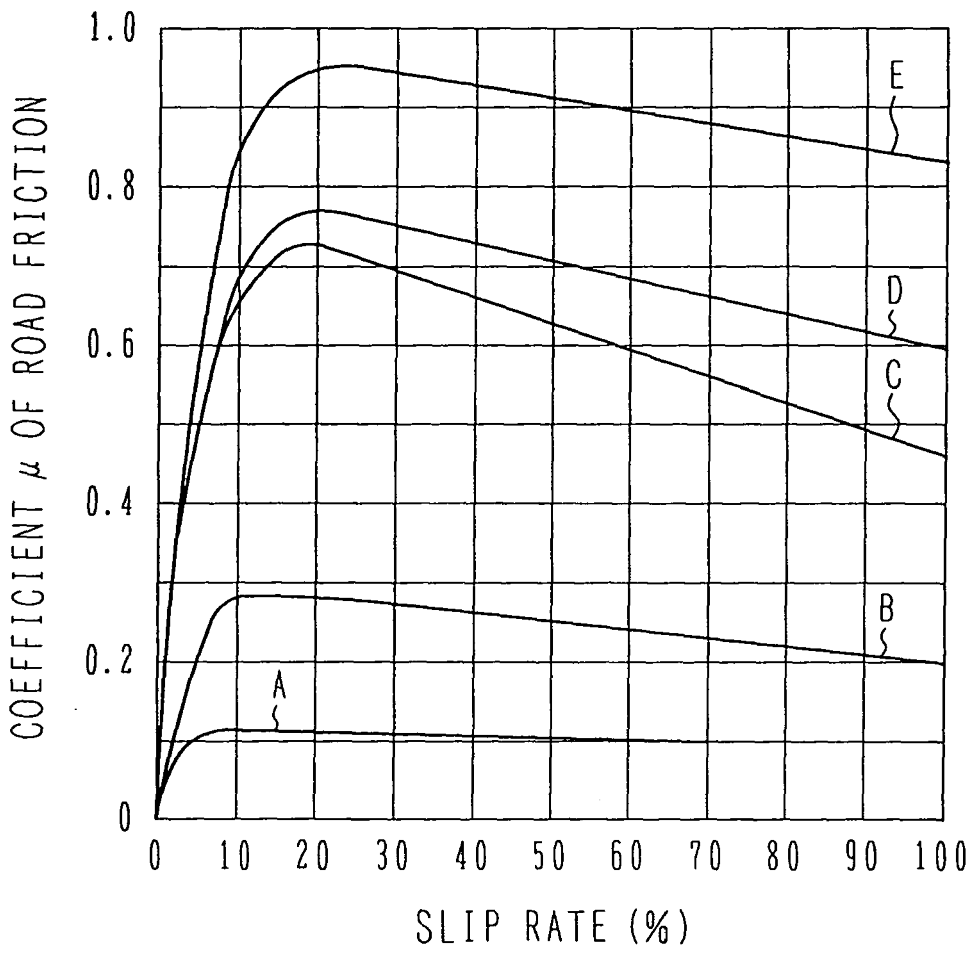
COEFFICIENT μ OF ROAD FRICTION
1.0
0.8
0.6
0.4
0.2
0
0
10
20
30
40
50
60
70
80
90
100
SLIP RATE (%)
A
B
C
D
E

FIG. 13

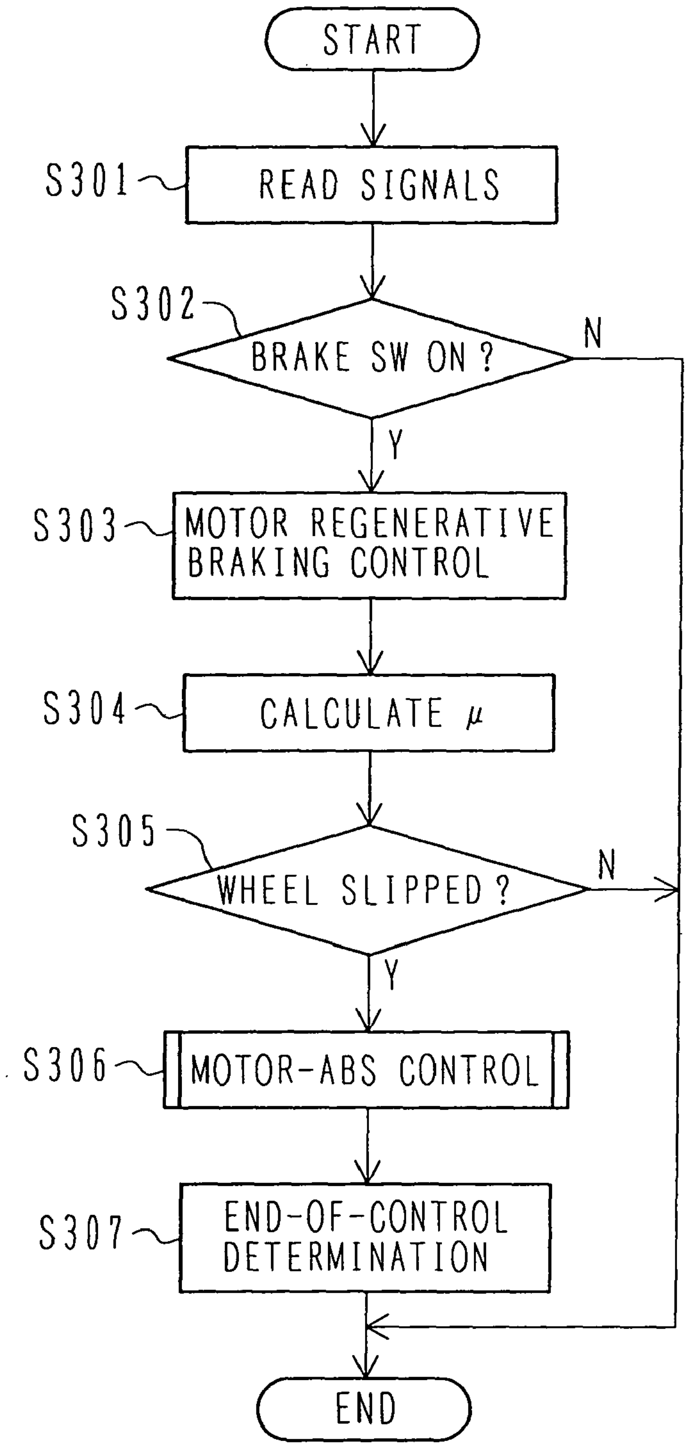
START
S301
READ SIGNALS
S302
BRAKE SW ON ?
N
Y
S303
MOTOR REGENERATIVE BRAKING CONTROL
S304
CALCULATE μ
S305
WHEEL SLIPPED ?
N
Y
S306
MOTOR-ABS CONTROL
S307
END-OF-CONTROL DETERMINATION
END

FIG. 14

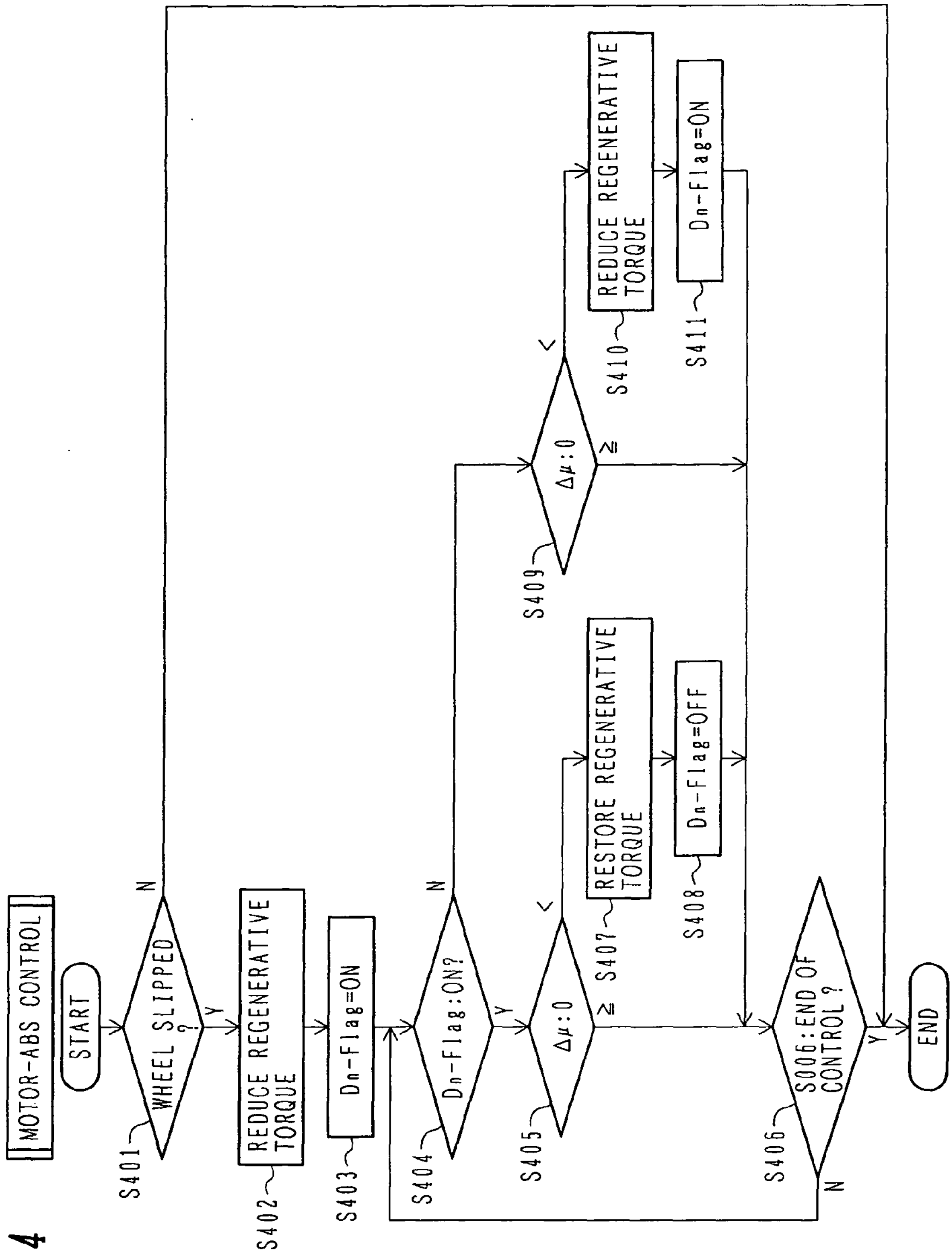
MOTOR-ABS CONTROL
START
S401
WHEEL SLIPPED ?
Y
N
S402
REDUCE REGENERATIVE TORQUE
S403
Dn-Flag=ON
S404
Dn-Flag:ON?
Y
N
S405
Δμ:0
≧
<
S407
RESTORE REGENERATIVE TORQUE
S408
Dn-Flag=OFF
S409
Δμ:0
≧
<
S410
REDUCE REGENERATIVE TORQUE
S411
Dn-Flag=ON
S406
S006:END OF CONTROL ?
Y
N
END

FIG. 15

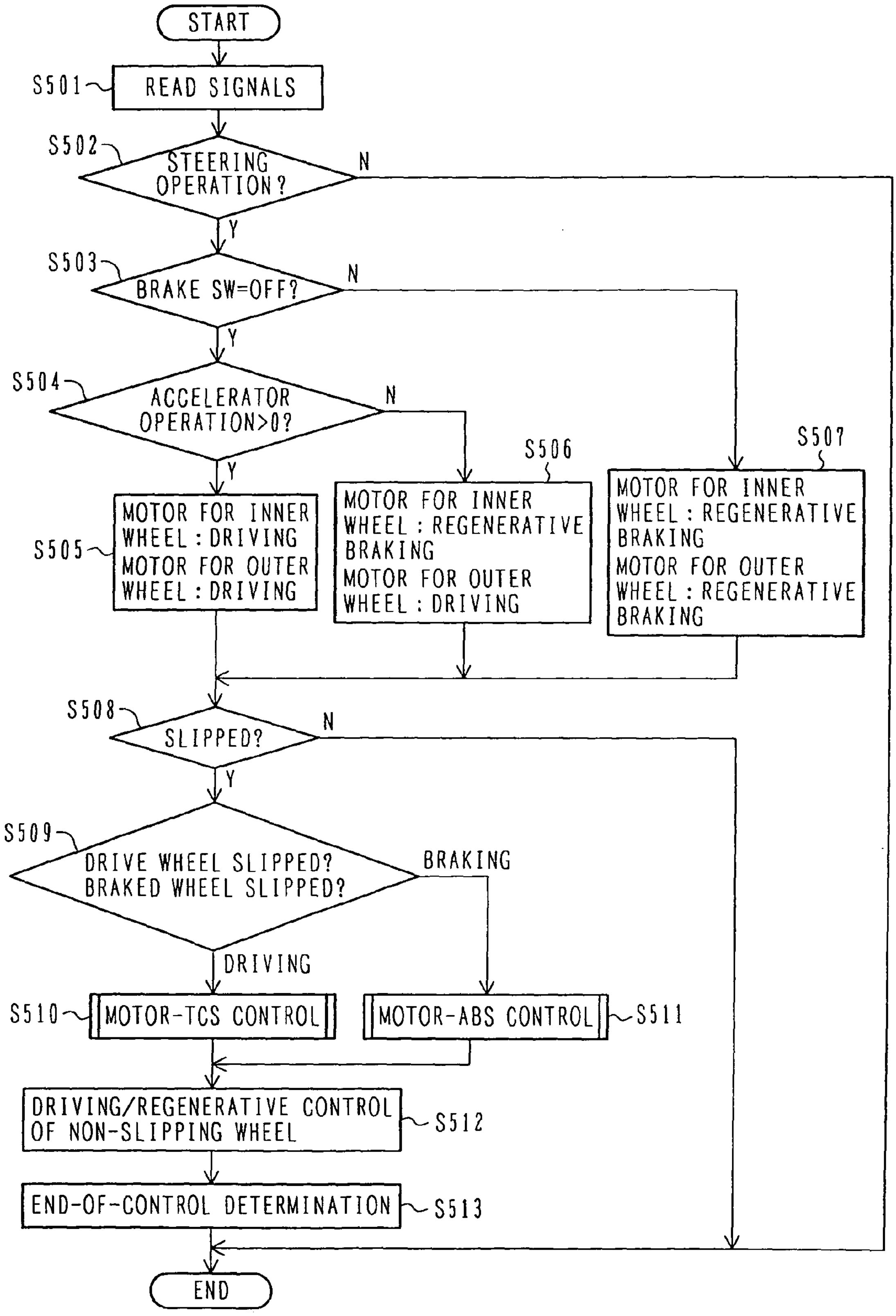
START
S501
READ SIGNALS
S502
STEERING OPERATION?
N
Y
S503
BRAKE SW=OFF?
N
Y
S504
ACCELERATOR OPERATION>0?
N
Y
S505
MOTOR FOR INNER WHEEL : DRIVING
MOTOR FOR OUTER WHEEL : DRIVING
S506
MOTOR FOR INNER WHEEL : REGENERATIVE BRAKING
MOTOR FOR OUTER WHEEL : DRIVING
S507
MOTOR FOR INNER WHEEL : REGENERATIVE BRAKING
MOTOR FOR OUTER WHEEL : REGENERATIVE BRAKING
S508
SLIPPED?
N
Y
S509
DRIVE WHEEL SLIPPED? BRAKED WHEEL SLIPPED?
BRAKING
DRIVING
S510
MOTOR-TCS CONTROL
MOTOR-ABS CONTROL
S511
DRIVING/REGENERATIVE CONTROL OF NON-SLIPPING WHEEL
S512
END-OF-CONTROL DETERMINATION
S513
END

FIG. 16

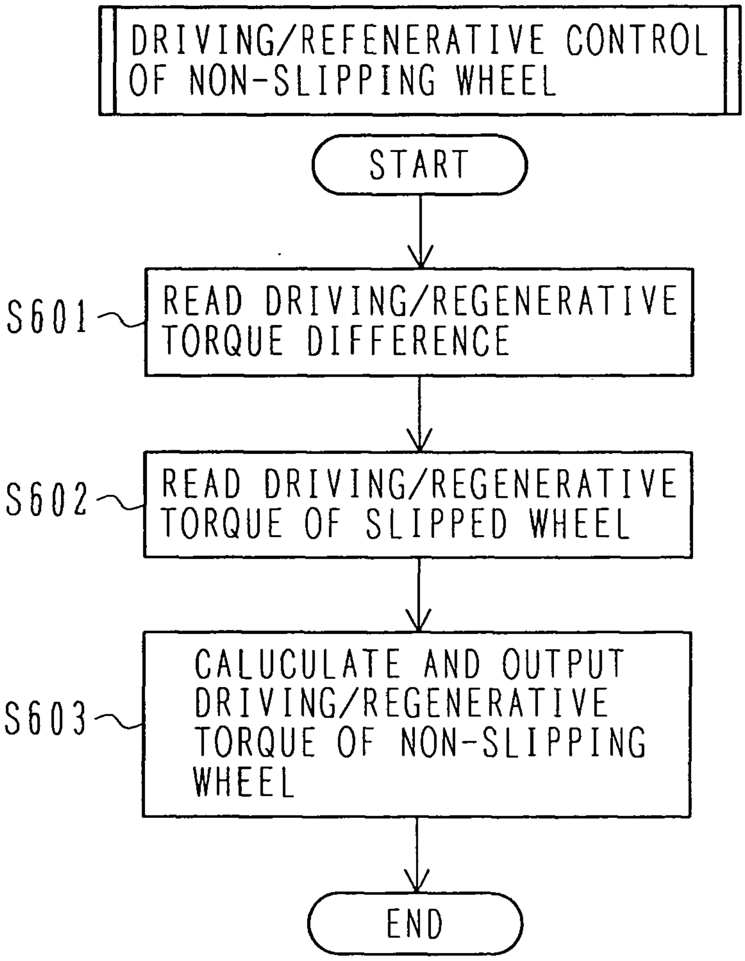
DRIVING/REFENERATIVE CONTROL OF NON-SLIPPING WHEEL
START
S601
READ DRIVING/REGENERATIVE TORQUE DIFFERENCE
S602
READ DRIVING/REGENERATIVE TORQUE OF SLIPPED WHEEL
S603
CALUCULATE AND OUTPUT DRIVING/REGENERATIVE TORQUE OF NON-SLIPPING WHEEL
END

FIG.17

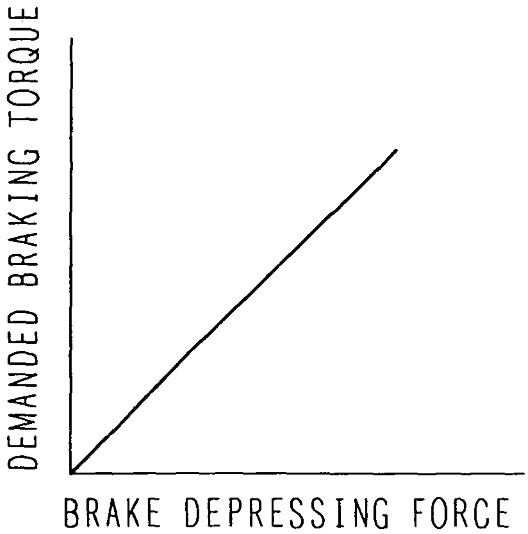
DEMANDED BRAKING TORQUE
BRAKE DEPRESSING FORCE

FIG.18

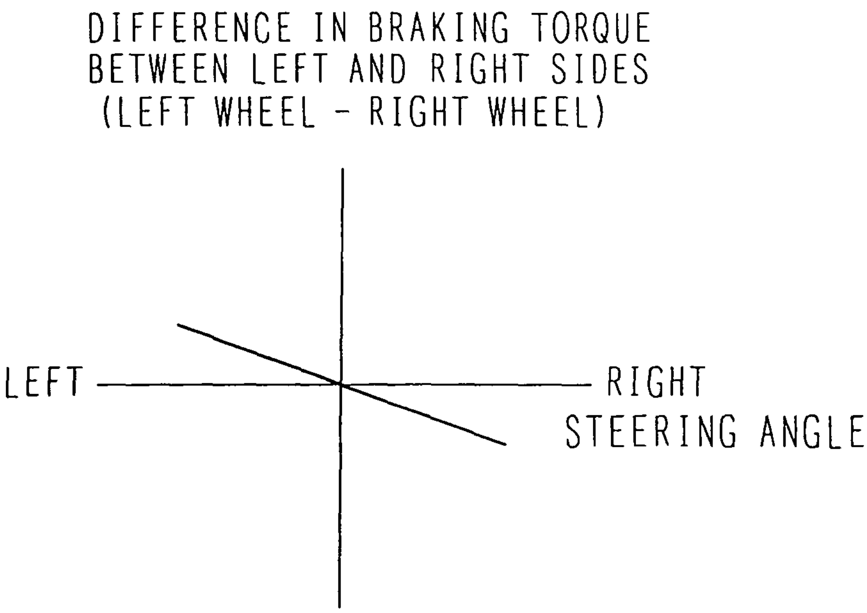
DIFFERENCE IN BRAKING TORQUE
BETWEEN LEFT AND RIGHT SIDES
(LEFT WHEEL - RIGHT WHEEL)
LEFT
RIGHT
STEERING ANGLE

FIG.19

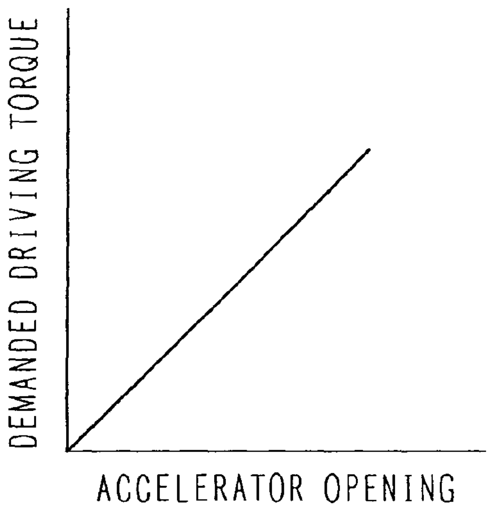


FIG.20

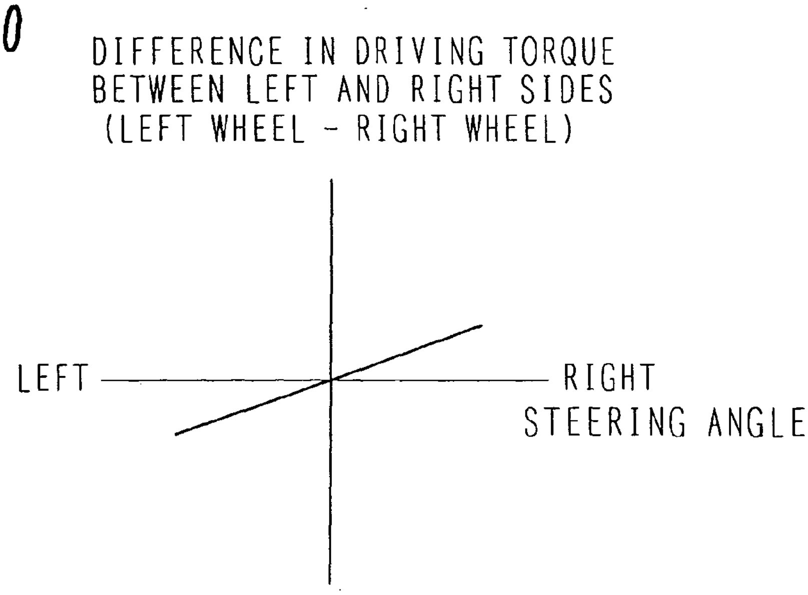


FIG.21

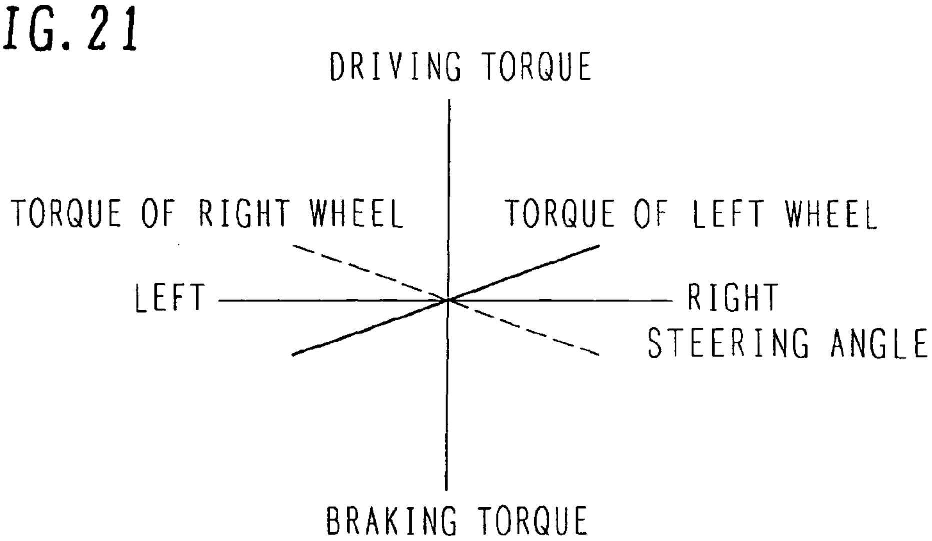

FIG.22

FF-1

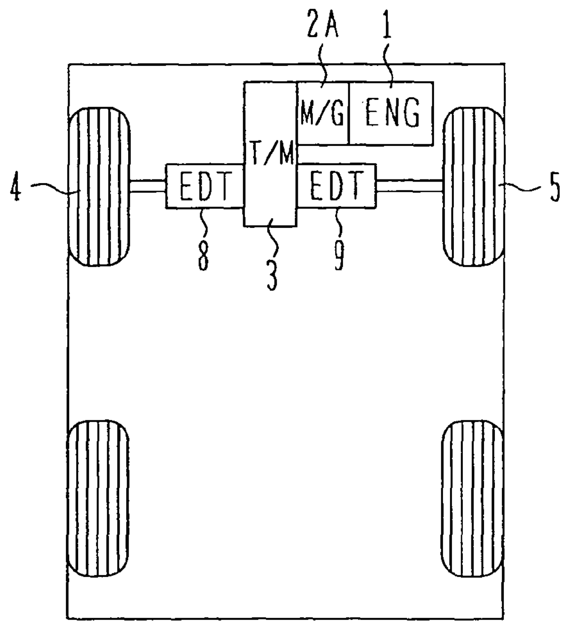


FIG.23

FF-2

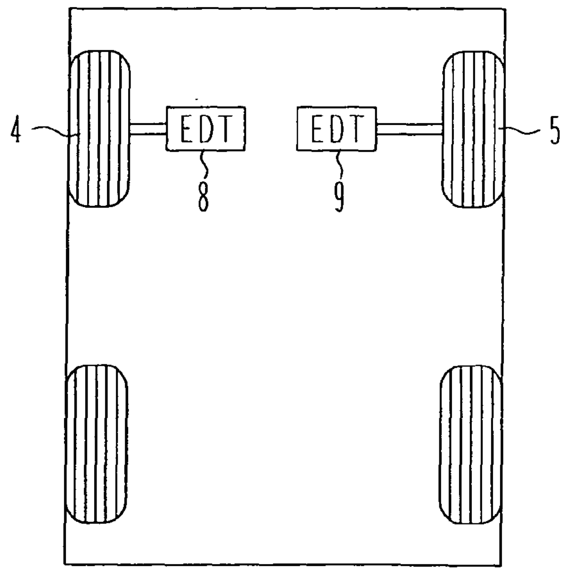

FIG.24

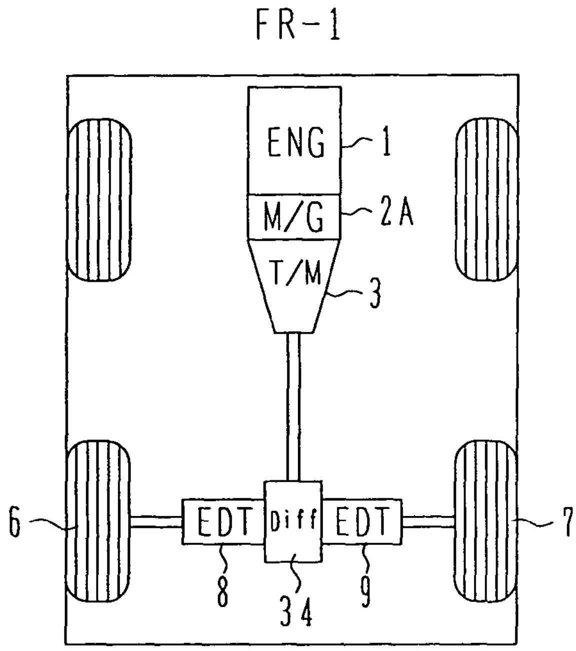


FIG.25

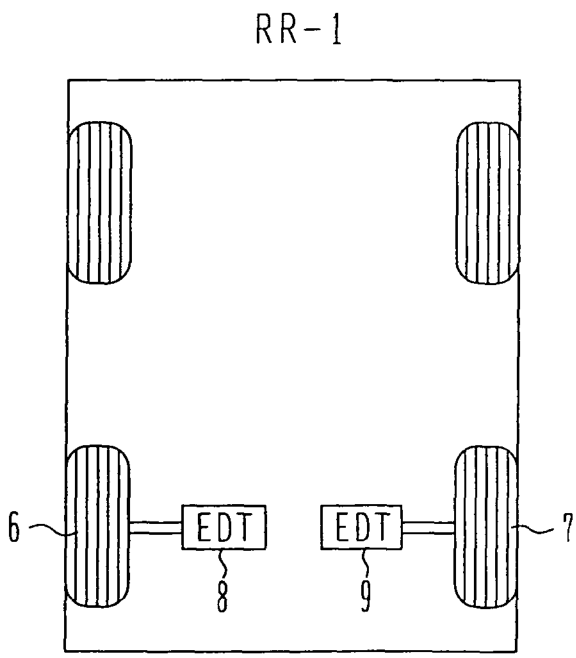

FIG. 26

4WD-2

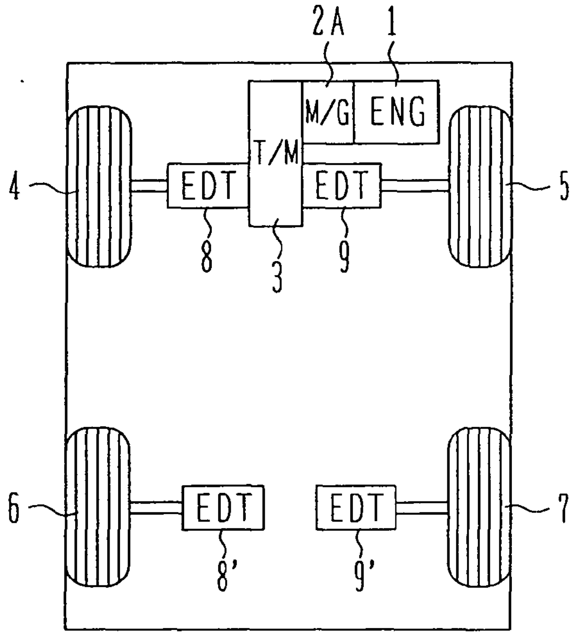


FIG. 27

4WD-3

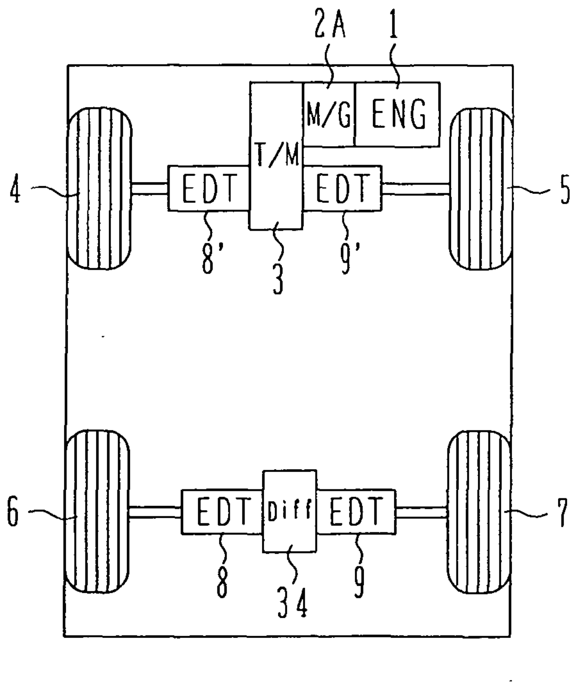

FIG. 28

4WD-4

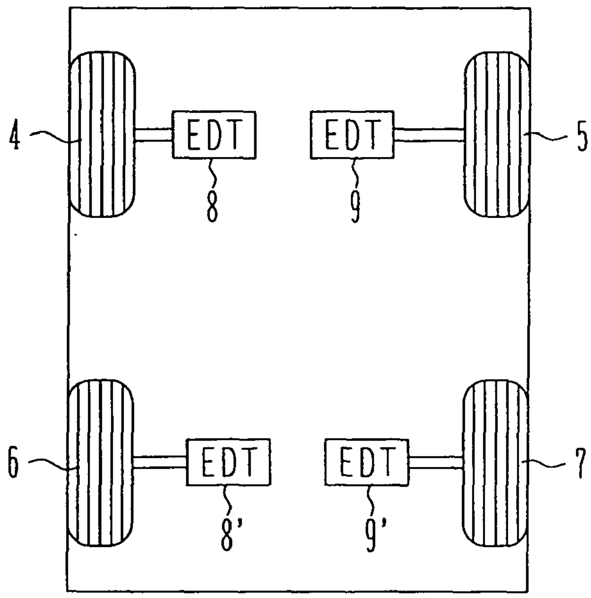

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5002501 A
- JP 5002501 U